# EUROPEAN PATENT APPLICATION

(11) **EP 4 134 821 A1**
(43) Date of publication of application: **15.02.2023**
(21) Application number: 22181918.8
(22) Date of filing: 29.06.2022
(51) Int. Cl.: G06F 9/50, G06N 3/04

(54) **APPARATUS, ARTICLES OF MANUFACTURE, AND METHODS FOR COMPOSABLE MACHINE LEARNING COMPUTE NODES**

(30) Priority: 10.08.2021 IN 202141036070; 21.12.2021 US 202117558284
(71) Applicant: INTEL Corporation, Santa Clara, CA 95054 (US)
(72) Inventor: NURVITADHI, Eriko, Hillsboro, OR 97124 (US); DAVARE, Abhijit, Hillsboro, OR 97124 (US); LACEWELL, Chaunte, Hillsboro, OR 97123 (US); BHIWANDIWALLA, Anahita, San Jose, CA 95127 (US); JAIN, Nilesh, Portland, OR (US); POORNACHANDRAN, Rajesh, Portland, OR 97229 (US); MUNOZ, Juan Pablo, Folsom, CA 95630 (US); BOUTROS, Andrew, Toronto, M4Y 0E6 (CA); AKHAURI, Yash, 201305 Uttar Pradesh (IN)
(74) Representative: Viering, Jentschura & Partner mbB Patent- und Rechtsanwälte

(57) **Abstract**

Methods, apparatus, systems, and articles of manufacture are disclosed for composable machine learning compute nodes. An example apparatus includes interface circuitry to receive a workload, instructions in the apparatus, and processor circuitry to at least one of execute or instantiate the instructions to generate a first configuration of one or more machine-learning models based on a workload, generate a second configuration of hardware, determine an evaluation parameter based on an execution of the workload, the execution of the workload based on the first configuration and the second configuration, and, in response to the evaluation parameter satisfying a threshold, execute the one or more machine-learning models in the first configuration on the hardware in the second configuration, the one or more machine-learning models and the hardware to execute the workload.

## Description

### RELATED APPLICATION

This patent claims the benefit of Indian Patent Application No. 202141036070, which was filed on August 10, 2021. Indian Patent Application No. 202141036070 is hereby incorporated herein by reference in its entirety. Priority to Indian Patent Application No. 202141036070 is hereby claimed.

### FIELD OF THE DISCLOSURE

This disclosure relates generally to machine learning and, more particularly, to apparatus, articles of manufacture, and methods for composable machine learning compute nodes.

### BACKGROUND

Compute workloads may be carried out by using machine-learning models. Machine-learning models, such as neural networks, are useful tools that have demonstrated their value solving complex problems regarding pattern recognition, natural language processing, automatic speech recognition, etc. Identifying an optimal combination of hardware and/or software (e.g., a machine-learning model) to execute a compute workload is complex due to the vast range of available types of hardware and/or machine-learning models and customization(s) thereof.

### BRIEF DESCRIPTION OF THE DRAWINGS

FIG. 1 is an illustration of an example automatic machine learning (AutoML) architecture including an example machine-learning system configurator to identify and/or generate a composable machine learning compute node.
FIG. 2 is a block diagram of an example implementation of the machine-learning system configurator of FIG. 1.
FIG. 3 is a block diagram of an example implementation of the machine-learning system configurator of FIGS. 1 and/or 2.
FIG. 4 is an illustration of an example workflow to generate a composable machine learning compute node.
FIG. 5 is an illustration of another example workflow to identify a composable machine learning compute node.
FIG. 6 is an illustration of an example implementation of an example ontology database.
FIG. 7 is an illustration of yet another example workflow to identify a composable machine learning compute node.
FIG. 8 is a flowchart representative of example machine readable instructions and/or example operations that may be executed by example processor circuitry to implement the example composable machine learning system configurator of FIGS. 1, 2, and/or 3 to execute a workload with a composable machine learning compute node.
FIG. 9 is a flowchart representative of example machine readable instructions and/or example operations that may be executed by example processor circuitry to implement the example composable machine learning system configurator of FIGS. 1, 2, and/or 3 to generate a first configuration of one or more machine-learning models based on a machine-learning workload.
FIG. 10 is a flowchart representative of example machine readable instructions and/or example operations that may be executed by example processor circuitry to implement the example composable machine learning system configurator of FIGS. 1, 2, and/or 3 to generate a second configuration of hardware.
FIG. 11 is a flowchart representative of example machine readable instructions and/or example operations that may be executed by example processor circuitry to implement the example composable machine learning system configurator of FIGS. 1, 2, and/or 3 to adjust a first configuration based on an evaluation parameter.
FIG. 12 is a flowchart representative of example machine readable instructions and/or example operations that may be executed by example processor circuitry to implement the example composable machine learning system configurator of FIGS. 1, 2, and/or 3 to adjust a second configuration based on an evaluation parameter.
FIG. 13 is a flowchart representative of example machine readable instructions and/or example operations that may be executed by example processor circuitry to implement the example composable machine learning system configurator of FIGS. 1, 2, and/or 3 to deploy a compute node to execute a machine-learning workload.
FIG. 14 is a block diagram of an example processing platform including processor circuitry structured to execute the example machine readable instructions and/or the example operations of FIGS. 8-13 to implement the example composable machine learning system configurator of FIGS. 1, 2, and/or 3.
FIG. 15 is a block diagram of an example implementation of the processor circuitry of FIG. 14.
FIG. 16 is a block diagram of another example implementation of the processor circuitry of FIG. 14.
FIG. 17 is a block diagram of an example software distribution platform (e.g., one or more servers) to distribute software (e.g., software corresponding to the example machine readable instructions of FIGS. 8-13) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not to scale.

### DETAILED DESCRIPTION

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

As used herein "substantially real time" and "substantially simultaneously" refers to occurrence in a near instantaneous manner recognizing there may be real world delays for computing time, transmission, etc. Thus, unless otherwise specified, "substantially real time" and "substantially simultaneously" refer to real time +/- 1 second. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry best suited to execute the computing task(s).

Automated Machine Learning (AutoML) provides techniques to improve access and availability of Machine Learning (ML) to various applications and use cases. AutoML is the process of automating the operations of applying ML to tasks and workloads. For example, AutoML may be used to automate the selection, composition, and parameterization of ML models. In some such examples, AutoML may be used throughout the ML pipeline from receiving a raw dataset to generating a deployable machine-learning model.

Some AutoML approaches may select an ML model (e.g., an ML model to execute a workload) based on a hardware search space and/or a software search space. As used herein, a "hardware search space" is a space or set of feasible hardware, configurations of the hardware, etc., and/or combination(s) thereof, among which a desired hardware configuration resides to execute an ML model. For example, an AutoML system may evaluate various types of ML models based on configurations of hardware included in the hardware search space. As used herein, a "software search space" is a space of feasible ML models, configurations of the ML models, etc., and/or combination(s) thereof, among which a desired software configuration resides to execute a workload (e.g., a compute workload, an ML workload, an ML task, an ML operation, etc.). For example, an AutoML system may evaluate various types of ML models based on the ML models and/or configurations of the ML models included in the software search space.

Some AutoML approaches may use a single and inflexible template of hardware (e.g., a CPU, a GPU, an FPGA, etc.) to express a hardware search space that an AutoML system may use to identify an ML model to execute a workload of interest. For example, the hardware template may be inflexible because interconnect topologies of the hardware may be fixed and/or otherwise non-configurable. Some such AutoML approaches may evaluate different types of ML models and/or configurations of the ML models based on a single type of hardware. In some such examples, the type of hardware may have weaknesses when instantiating particular one(s) of the ML models. Thus, the one(s) of the ML models may not be selected for a particular type of ML workload based on the type of hardware evaluated. In some such examples, the one(s) of the ML models may be efficient when executing the particular type of ML workload on different hardware, but the AutoML system may not choose the one(s) of the ML models because of the inefficiencies of the underlying type of hardware on which the one(s) of the ML models is/are being evaluated.

Some AutoML approaches may use a single and inflexible software template (e.g., a type of neural network, a configuration of the neural network, etc.) to express a software search space that an AutoML system may use to identify an ML model to execute a workload of interest. Some such AutoML approaches may evaluate execution(s) of workload(s) based on a single type of ML model. In some such examples, the ML model may have weaknesses when executing a particular type of workload. Thus, the one(s) of the ML models may not be selected for a particular type of ML workload. In some such examples, the one(s) of the ML models may be efficient when executing the particular type of ML workload, but the AutoML system may not choose the one(s) of the ML models because of the inefficiencies of the inflexible configurations of the software search space on which the one(s) of the ML models are being evaluated.

Co-development of artificial intelligence/machine learning (AI/ML) models and the hardware on which they are executed and/or instantiated is beneficial for obtaining highly efficient solutions. However, such co-development requires many slow, manual iterations by interdisciplinary human experts in both hardware design and AI/ML algorithms. Recently, AutoML approaches as described above have been proposed to reduce human design effort by performing automatic AI/ML hardware/software (HW/SW) co-design. However, as described above, existing AutoML approaches lack the hardware and software design flexibility that can unlock the true potential of AI/ML HW/SW co-design. For example, existing AutoML approaches typically use a single fixed hardware architecture template based on a fixed set of modules and connectivity, with a fixed set of low-level design parameters for each module (e.g., buffer sizes, a number of compute units, etc.). As a result, the hardware design search space is restricted to a limited set of instances from only a single hardware architecture style. Similarly, the software search space also has limitations. In a neural network search, typically a search space targets a single class of network (e.g., recurrent neural network (RNN) class only or convolution neural network (CNN) class only, for example).

Examples disclosed herein include apparatus, articles of manufacture, and methods for composable machine learning compute nodes. In some disclosed examples, incorporating hardware and software heterogeneity into an AutoML search can potentially discover new models (e.g., AI/ML models) that exploit the strengths of different compute platforms (e.g., branches and control-heavy on CPUs, massively parallel layers on GPUs, custom new layers on FPGAs, etc.) to generate a machine learning system based on composable, modular building blocks of hardware and/or software.

Examples disclosed herein include an expressive search space representation that covers multiple templates of hardware and software architectures. In some disclosed examples, the templates can be dynamically modifiable during the HW/SW co-design search. Advantageously, the expressive search space enables the HW/SW co-design systems to explore a much larger and richer space of HW/SW designs across multiple architecture styles. In some disclosed examples, one(s) of the architectural styles can be flexible in their respective sets of modules and connectivity (e.g., selection and/or configuration of connections, topologies, inputs/outputs, etc.). In some such disclosed examples, the sets of modules and connectivity can be formable through composable building blocks. Advantageously, examples disclosed herein improve the likelihood of discovering more efficient hardware architecture instances and their corresponding co-designed software compared to prior AutoML approaches because examples disclosed herein offer much larger HW/SW search space(s) and composable version(s) thereof.

Examples disclosed herein include a set of hardware architecture templates and software architecture templates. Advantageously, the hardware and software templates can be based on a palette of composable architecture building blocks, each of which can have a set of micro-architectural parameters. In some disclosed examples, the micro-architectural parameters can be searchable to enhance the granularity of AutoML searches. Advantageously, the example hardware and software templates are not limited to a predefined set of modules and their fixed connectivity like templates used in some prior AutoML approaches. In some disclosed examples, the composable architectural building blocks can be flexibly combined, added, removed, modified, and/or mutated based on a set of design rules (e.g., pre-specified design rules, design rules dynamically specified or specified on-the-fly, etc.) to create a plethora of new HW/SW architecture instances. In some disclosed examples, the formal and precise semantics and interfaces of the example hardware and software templates allow for automated search of the HW/SW design space in an AutoML framework, as well as easily extending the HW/SW blocks palette with new user and/or machine-specified blocks.

Examples disclosed herein include simultaneously evolving multiple sets of relevant composable building blocks, each of which may cover a different architecture class and design style. For example, in the hardware search space, having an AI/ML processor architecture based on the systolic array design style can be suitable for compute-intensive AI/ML models, but not suitable for memory-bound and less compute-intensive workloads. Examples disclosed herein, therefore, can simultaneously evolve HW architectures with different architectural design styles to allow the AI/ML models to flexibly evolve to achieve improved software accuracy and hardware efficiency during the co-design process. Similarly, by way of example in the software search space (e.g., the neural network software search space), there are multiple classes of networks with their own beneficial properties (e.g., CNNs, RNNs, Transformers, etc.) and composable building blocks (e.g., matrix times vector operations (e.g., matrix x vector) for RNNs, convolutions for CNNs, etc.). Advantageously, examples disclosed herein can build improved HW/SW solutions based on composable ML compute nodes to execute workloads with less development effort compared to prior AutoML approaches.

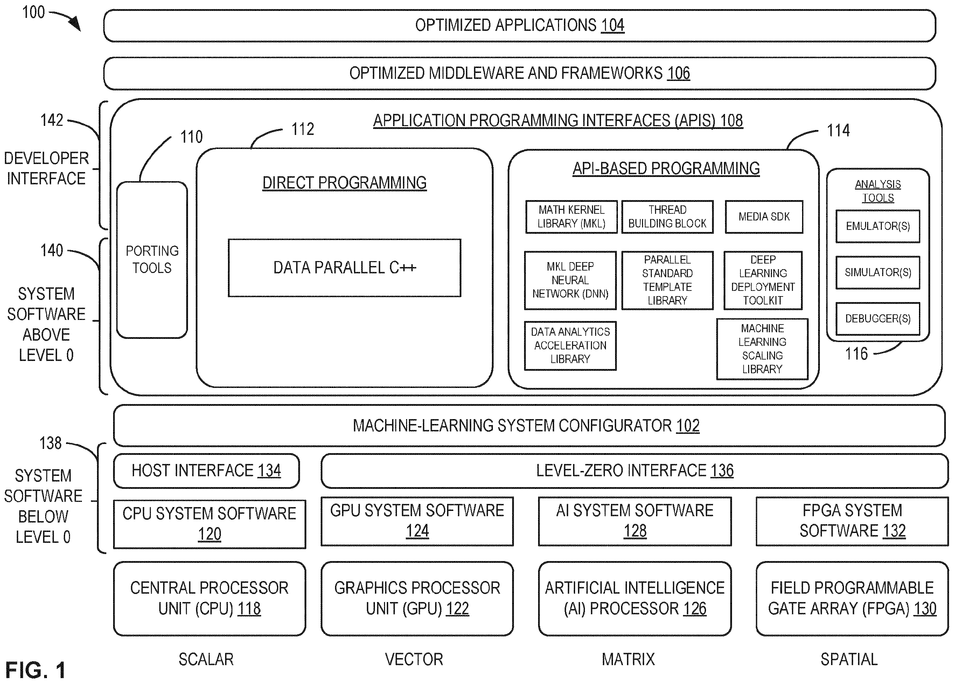

FIG. 1 is an illustration of an example AutoML architecture 100, which includes an example machine-learning (ML) system configurator 102 to identify and/or generate a composable ML compute node. The AutoML architecture 100 includes the ML system configurator 102 to generate a hardware search space and/or a software search space based on a compute task or workload (e.g., an Artificial Intelligence/Machine Learning (AI/ML) compute task or workload). The ML system configurator 102 can identify hardware, or portion(s) thereof, from the hardware search space. The ML system configurator 102 can also discover and/or otherwise identify software (e.g., an AI/ML model), or portion(s) thereof, from the software search space. In some examples, the ML system configurator 102 can individually and/or simultaneously evolve a composable ML compute node by iterating (i) an architecture and/or type of the hardware and/or the software and/or (ii) configuration(s) of the hardware and/or the software. For example, the ML system configurator 102 can evolve the composable ML compute node by evaluating the hardware and/or the software when executing a workload and/or based on a simulation of the hardware and/or software executing the workload. In some such examples, the composable ML compute node can be composable because hardware and/or software components can be selected and assembled in various combinations to satisfy specific or pre-defined requirements (e.g., an accuracy requirement, a latency requirement, a throughput requirement, etc.). In some such examples, in response to an identification of a particular combination of hardware and/or software that satisfies the specific or pre-defined requirements, the ML system configurator 102 can output the combination as a composable ML compute node to execute a workload of interest.

In some examples, a composable ML compute node can be implemented by a single homogeneous computing or electronic system that may be configured and/or otherwise utilized to execute an AI/ML model. For example, the composable ML compute node can be implemented by a single Central Processor Unit (CPU), Graphics Processor Unit (GPU), Artificial Intelligence Processor (AI Processor), Field Programmable Gate Array (FPGA), Digital Signal Processor (DSP), XPU, etc. In some examples, the composable ML compute node can be implemented by portion(s) of a single homogeneous computing or electronic system, such as portion(s) (e.g., kernel(s)) of a single CPU, GPU, AI Processor, FPGA, DSP, XPU, etc. In some such examples, the portion(s) can include a kernel (e.g., a hardware kernel) and/or corresponding interconnect(s) to which different kernel(s), hardware, etc., can be coupled (e.g., physically coupled, communicatively coupled, coupled via a computing or electrical bus, etc.). In some examples, a composable ML compute node can be implemented by multiple ones of the same type of homogeneous computing or electronic system, or portion(s) thereof. For example, the composable ML compute node can be implemented by two or more CPUs (or portion(s) thereof), two or more GPUs (or portion(s) thereof), two or more AI Processors (or portion(s) thereof), two or more FPGAs (or portion(s) thereof), two or more DSPs (or portion(s) thereof), two or more XPUs (or portion(s) thereof), etc.

In some examples, a composable ML compute node can be implemented by a single heterogeneous computing or electronic system that may be configured and/or otherwise utilized to execute an AI/ML model. For example, the composable ML compute node can be implemented by a CPU, a GPU, an AI Processor, an FPGA, a DSP, XPU, etc., and/or any combination(s) thereof. In some such examples, the composable ML compute node can be implemented by one or more CPUs, one or more GPUs, one or more AI Processors, one or more FPGAs, one or more DSPs, one or more XPUs, etc., and/or any combination(s) thereof. In some examples, the composable ML compute node can be implemented by portion(s) of a single heterogeneous computing or electronic system, such as portion(s) of a CPU, GPU, AI Processor, FPGA, DSP, XPU, etc., and/or any combination(s) thereof. In some examples, a composable ML compute node can be implemented by multiple ones of the same heterogeneous computing or electronic system, or portion(s) thereof. For example, the composable ML compute node can be implemented by two or more instances of a heterogeneous computing system, which includes one or more CPUs (or portion(s) thereof), one or more GPUs (or portion(s) thereof), one or more AI Processors (or portion(s) thereof), one or more FPGAs (or portion(s) thereof), one or more DSPs (or portion(s) thereof), one or more XPUs (or portion(s) thereof), etc., and/or combination(s) thereof. In some examples, the composable ML compute node can be implemented by two or more different heterogeneous computing or electronic systems. For example, the composable ML compute node can be implemented by a first heterogeneous computing system and a second heterogeneous computing system. In some such examples, portion(s) of the first heterogeneous computing system and the second heterogeneous computing system can be different.

In some examples, the composable ML compute node can include, store, and/or otherwise access an executable construct to execute an AI/ML model to complete a workload, or portion(s) thereof. For example, the executable construct can be implemented by a configuration image, an executable binary, executable code (e.g., executable machine-readable code), an executable file (e.g., an executable binary file), an executable program, executable instructions (e.g., executable machine-readable instructions), etc., that, when executed, can implement an AI/ML model to effectuate completion of AI/ML workloads.

The AutoML architecture 100 of the illustrated example includes example optimized applications 104, example optimized middleware and frameworks 106, and example application programming interfaces (APIs) 108. In some examples, the optimized applications 104 can be implemented by applications (e.g., software applications, web- or browser-based applications, etc.) that are customized, tailored, and/or otherwise optimized to effectuate the identification and/or generation of a composable ML compute node. For example, the optimized applications 104 can be accessed, utilized, etc., by a developer (e.g., a software developer, a researcher, etc.), Information Technology (IT) personnel, etc. In some such examples, the optimized applications 104 can be accessed, utilized, etc., to co-design a hardware/software (HW/SW) solution for a technical problem that can benefit from AI/ML techniques. In some examples, the optimized middleware and frameworks 106 can be implemented by middleware and frameworks that are customized, tailored, and/or otherwise optimized to effectuate the identification and/or generation of a composable ML compute node. For example, the optimized middleware and frameworks 106 can implement an interface (e.g., communication, connectivity, etc.) between the optimized applications 104 and the APIs 108.

The APIs 108 of the illustrated example can be invoked to program, develop, and/or otherwise generate an AI/ML application by at least one of direct programming or API-based programming. The APIs 108 of the illustrated example include example porting tools 110, example direct programming APIs 112, example API-based programming APIs 114, and example analysis tools 116.

In some examples, the porting tools 110 can be implemented by software (e.g., a software application) that can adapt a program for the purpose of achieving some form of execution in a first computing or electronic environment that is different from a second computing or electronic environment for which the program was originally designed. For example, the porting tools 110 can convert and/or otherwise adapt a first program developed for a first type of hardware, operating system (OS), library, etc., into a second program for a second type of hardware, OS, library, etc.

In some examples, the direct programming APIs 112 can be invoked to effectuate direct programming tasks, which may include developing and/or compiling data parallel C++ applications. In some examples, the API-based programming APIs 114 can be invoked to effectuate API-based programming, which may include developing and/or compiling applications that call (or invoke, instantiate, etc.) a Math Kernel Library (MKL), an MKL Deep Neural Network (DNN) library, a data analytics acceleration library, a thread building block library, a parallel standard template library, a media software development kit (SDK), a deep learning deployment toolkit, a machine learning scaling library, etc., and/or any combination(s) thereof.

In some examples, the analysis tools 116 can be called, instantiated, and/or otherwise invoked to analyze hardware, software, and/or configuration(s) thereof of a composable ML compute node. For example, the analysis tools 116 can instantiate emulator(s) to emulate all of the hardware and/or software features of the composable ML compute node to generate and/or otherwise output one or more evaluation parameters. In some such examples, the evaluation parameters can include parameters representative and/or otherwise indicative of accuracy, latency, a number of cycles to complete a workload, or throughput of the composable ML compute node. In some examples, the evaluation parameters can include parameters representative and/or otherwise indicative of a processor or clock frequency, a fabric frequency, a read memory bandwidth, a write memory bandwidth, hardware de-rate factors, a number of memory ports, a number of data processing units (DPUs), a number of model layers (e.g., neural network layers, convolution layers, etc.) an activation precision (e.g., a precision of activation values to be processed), a weight precision (e.g., a precision of weight values to be processed), etc., and/or any combination(s) thereof. For example, the analysis tools 116 can execute an emulator based on the composable ML compute node. In some such examples, the analysis tools 116 can execute the emulator to determine a throughput of the composable ML compute node when the composable ML compute node executes a particular AI/ML model having a particular configuration.

In some examples, the analysis tools 116 can instantiate simulator(s) to simulate the behavior, the configuration, etc., of a composable ML compute node to generate and/or otherwise output one or more evaluation parameters. For example, the analysis tools 116 can execute a model (e.g., a simulation model, an AI/ML model, etc.) based on the composable ML compute node. In some such examples, the analysis tools 116 can execute the model to estimate, predict, and/or otherwise determine a throughput of the composable ML compute node when the composable ML compute node executes a particular AI/ML model having a particular configuration.

The AutoML architecture 100 of the illustrated example includes different types of hardware and/or software from which a composable ML compute node can be generated. In the illustrated example, the AutoML architecture 100 includes interfaces and target system software for scalar, vector, matrix, and spatial hardware. Additionally and/or alternatively, any other type of hardware may be used. In this example, the scalar hardware is implemented by an example CPU 118 and example CPU system software 120. For example, the CPU system software 120 can include instructions corresponding to a CPU Instruction Set Architecture (ISA). In this example, the vector hardware is implemented by an example GPU 122 and example GPU system software 124. For example, the GPU system software 124 can include kernels, portion(s) of code, etc., such as kernels, compute kernels, and/or shaders. In some examples, the kernels, the portion(s) of code), etc., can be represented in a high-level programming language such as, for example, a High-Level Shader Language (HLSL), OpenCL, etc.

In this example, the matrix hardware is implemented by an example AI processor 126 and example AI system software 128. For example, the AI system software 128 can include one or more AI/ML algorithms, models, etc., such as neural networks (e.g., convolution neural networks (CNNs), deep neural networks (DNNs), recurrent neural networks (RNNs), etc.), Linear Regression models, Logistic Regression Models, Decision Tree Models, Learning Vector Quantization Models, etc., and/or combination(s) thereof. In this example, the spatial hardware is implemented by an example FPGA 130 and example FPGA system software 132. For example, the FPGA system software 132 can include kernels, portion(s) of code, etc., based on a hardware description language (HDL) such as Verilog.

The ML system configurator 102 of the illustrated example can interface with the CPU 118 and/or the CPU system software 120 via an example host interface 134. The ML system configurator 102 of the illustrated example can interface with the GPU 122, the GPU system software 124, the AI processor 126, the AI system software 128, the FPGA 130, and/or the FPGA system software 132 via an example level-zero interface 136.

In the illustrated example, the CPU system software 120, the GPU system software 124, the AI system software 128, the FPGA system software 132, the host interface 134, and/or the level-zero interface 136 can correspond to and/or otherwise implement example system software below level zero 138. For example, system software below level zero 138 can correspond to and/or otherwise implement low-level direct-to-metal interfaces that are tailored to hardware, such as the CPU 118, the GPU 122, etc.

In the illustrated example, the APIs 108 can implement example system software above level zero 140 and an example developer interface 142. For example, a developer, a user, etc., can access and/or otherwise utilize the AutoML architecture 100 by way of the APIs 108. In some examples, a developer, a user, etc., can access and/or otherwise utilize system software at a higher level than low-level direct-to-metal interfaces by way of the APIs 108. In some examples, a developer, a user, etc., can access and/or otherwise utilize the system software below level zero 138 via the host interface 134 and/or the level-zero interface 136.

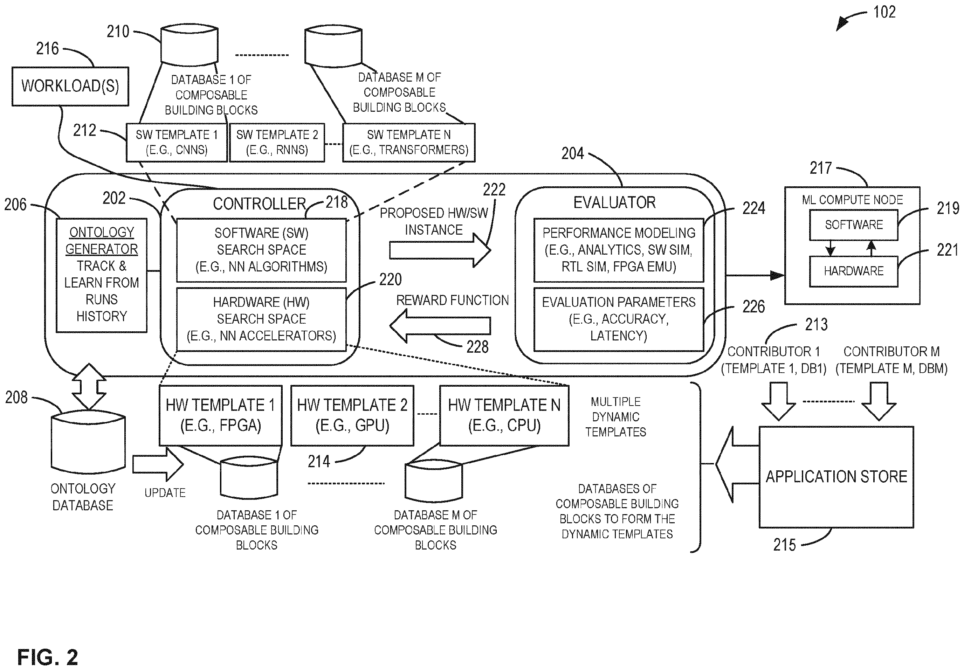

FIG. 2 is a block diagram of an example implementation of the ML system configurator 102 of FIG. 1. The ML system configurator 102 includes an example controller 202, an example evaluator 204, an example ontology generator 206, and an example ontology database 208.

In the illustrated example, the ontology database 208 includes a plurality of example composable building block databases 210. In the illustrated example, the composable building block databases 210 include example software templates 212 and hardware templates 214. For example, the composable building block databases 210 can include a first composable building block database, which can include a first software template (identified by SW TEMPLATE 1) of the software templates 212. In some such examples, the first software template can include one or more CNNs, configuration(s) thereof, and/or metadata. For example, the metadata can describe an operation of the CNN, different configurations and/or capabilities of the CNN, aspects of the CNN that can be modified or mutated, etc. In some examples, the first software template can expose and/or otherwise make available aspects, configurations, interconnections, etc., of a CNN that can be adjusted, changed, modified, mutated, etc. In some examples, the composable building block databases 210 can include a second composable building block database, which can include a second software template (identified by SW TEMPLATE 2) of the software templates 212, a third composable building block database, which can include a third software template (identified by SW TEMPLATE N) of the software templates 212, etc. In the illustrated example, the second software template can include one or more RNNs and/or configuration(s) thereof. In the illustrated example, the third software template can include one or more Transformers and/or configuration(s) thereof. Additionally and/or alternatively, any other type of AI/ML model and/or configuration(s) thereof may be included in the composable building block databases 210.

In some examples, the composable building block databases 210 can include database(s) and/or template(s) from example contributors 213. For example, the contributors 213 can be users, developers, researchers, etc. The contributors 213 of the illustrated example can upload and/or otherwise provide database(s), template(s), etc., to an example repository 215. In some examples, the contributors 213 can include metadata in the database(s), the template(s), etc., that provide indications on the configurability of hardware and/or software of the template(s). In the illustrated example, the repository 215 is an application store (e.g., an App Store) that can be accessed by the ML system configurator 102 for use in composing, generating, etc., an example ML compute node 217. For example, the ML compute node 217 can implement a composable ML compute node. The ML compute node 217 of the illustrated example incudes example software 219 and example hardware 221. For example, the software 219 can be implemented by one or more AI/ML models. In some examples, the hardware 221 can be implemented by one or more CPUs (or portion(s) thereof), one or more GPUs (or portion(s) thereof), one or more AI processors (or portion(s) thereof), one or more FPGAs (or portion(s) thereof), one or more ASICs (or portion(s) thereof), etc., and/or any combination(s) thereof.

In the illustrated example, the composable building block databases 210 can include a fourth composable building block database, which can include a first hardware template (identified by HW TEMPLATE 1) of the hardware templates 214. In some such examples, the first hardware template can include one or more FPGAs (e.g., one or more architectures, manufacturer models, types, etc., of FPGAs) and/or configuration(s) thereof. For example, the hardware template can expose and/or otherwise make available aspects, configurations, interconnections, etc., of an FPGA that can be adjusted, changed, modified, mutated, etc. In some examples, the composable building block databases 210 can include a fifth composable building block database, which can include a second hardware template (identified by HW TEMPLATE 2), a sixth composable building block database, which can include a third hardware template (identified by HW TEMPLATE N), etc. In the illustrated example, the second hardware template can include one or more GPUs (e.g., one or more architectures, manufacturer models, types, etc., of GPUs) and/or configuration(s) thereof. In the illustrated example, the third hardware template can include one or more CPUs (e.g., one or more architectures, manufacturer models, types, etc., of CPUs) and/or configuration(s) thereof. Additionally and/or alternatively, any other type of hardware and/or configuration(s) thereof may be included in the composable building block databases 210.

In example operation, the controller 202 can receive, obtain, and/or otherwise identify example workload(s) (e.g., one or more AI/ML workloads) 216. For example, the workload(s) 216 can be scientific simulations, financial analytics, AI/deep learning, 3D modeling and analysis, image and audio/video processing, cryptography, data compression, etc. In the illustrated example, the controller 202 can generate an example software search space 218 and an example hardware search space 220 based on the workload(s) 216.

In some examples, the controller 202 can generate the software search space 218 and the hardware search space 220 in response to a query to the ontology generator 206 for HW/SW solutions for previous AutoML searches that correspond to the workload(s) 216. For example, the controller 202 can query the ontology generator 206 with an identifier that corresponds to the workload(s) 216, an initial or seed AI/ML model that may execute the workload(s) 216, etc. In some such examples, the ontology generator 206 can identify an association of the initial or seed AI/ML model and another AI/ML model in the ontology database 208. For example, the ontology generator 206 can track and learn from previous searches, runs of the ML system configurator 102, etc. In some examples, the ontology generator 206 can search the ontology database 208 for such previous searches, runs, etc. For example, the ontology database 208 can store learnings, mappings, etc., associated with the software templates 212 and/or the hardware templates 214 across the hardware and/or software domain from prior searches. In some examples, the prior searches can correspond to searches for a previous workload. In some examples, the prior searches can correspond to iterations of searches for the workload(s) 216. Advantageously, the controller 202 can utilize the ontology generator 206 to identify fine granular composable building blocks to mix and match towards dynamic flexible template generation to be used in the generation of the software search space 218 and the hardware search space 220.

Advantageously, the controller 202 can provide expressive search space representation (e.g., the software search space 218, the hardware search space 220, etc.) that covers multiple templates of hardware and software architectures (e.g., the software templates 212, the hardware templates 214, etc.), where the templates can be dynamically modifiable during the HW/SW co-design search. Advantageously, the controller 202 can enable a HW/SW co-design system, which may be implemented by the ML system configurator 102, to explore a much larger and richer space of HW/SW designs, across multiple architecture styles. In some examples, one(s) of the architectural styles corresponding to the software templates 212 and/or the hardware templates 214 can be flexible in their respective sets of modules and connectivity (e.g., selection and/or configuration of connections, topologies, inputs/outputs, etc.). In some such examples, the sets of modules and connectivity can be formable through composable building blocks, which can be included in the software templates 212 (e.g., composable software building blocks in the software templates 212) and/or the hardware templates 214 (e.g., composable hardware building blocks in the hardware templates 214). Advantageously, the controller 202, and/or, more generally, the ML system configurator 102, can improve the likelihood of discovering more efficient hardware architecture instances and their corresponding co-designed software compared to prior AutoML approaches because the controller 202 of the illustrated example can utilize much larger HW/SW search space(s) and composable version(s) thereof.

In some examples, the controller 202, the evaluator 204, the ontology generator 206, etc., and/or, more generally, the ML system configurator 102, can utilize Artificial intelligence and/or machine learning techniques to identify and/or otherwise generate the ML compute node 217 to execute the workload(s) 216. Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process (e.g., a machine-learning training process). For instance, the controller 202, the evaluator 204, the ontology generator 206, and/or, more generally, the ML system configurator 102, can be trained with data to recognize patterns and/or associations and follow such patterns and/or associations when processing input data such that other input(s) result in output(s) consistent with the recognized patterns and/or associations.

Many different types of machine-learning models and/or machine-learning architectures exist. In some examples, the ML system configurator 102 generates the software 219 as neural network model(s). The Advantageously, using a neural network model enables the hardware 221, and/or, more generally, the ML compute node 217, to execute an AI/ML workload. In general, machine-learning models/architectures that are suitable to use in the example approaches disclosed herein include reinforcement learning networks. However, other types of machine learning models could additionally or alternatively be used such as recurrent neural networks (RNNs), supervised learning artificial neural network (ANN) models, clustering models, classification models, etc., and/or a combination thereof. Example supervised learning ANN models may include two-layer (2-layer) radial basis neural networks (RBN), learning vector quantization (LVQ) classification neural networks, etc. Example clustering models may include k-means clustering, hierarchical clustering, mean shift clustering, density-based clustering, etc. Example classification models may include logistic regression, support-vector machine or network, Naive Bayes, etc. In some examples, the ML system configurator 102 can compile and/or otherwise generate the software 219 as lightweight machine-learning model(s).

In general, implementing an ML/AI system involves two phases, a learning/training phase and an inference phase. In the learning/training phase, a training algorithm is used to train the ML system configurator 102 to operate in accordance with patterns and/or associations based on, for example, training data. In general, the ML system configurator 102 includes internal parameters that guide how input data is transformed into output data, such as through a series of nodes and connections within the ML system configurator 102 to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process. In some examples, hyperparameters can control how the learning is performed (e.g., a learning rate, a number of layers to be used in the machine learning model, etc.). In some examples, hyperparameters that control model performance and training speed can be the learning rate, a number of Epochs, a topology of the neural network, a size of the neural network, and/or regularization parameter(s). Such hyperparameters are selected by, for example, trial and error to reach an optimal model performance. In some examples re-training may be performed. Such re-training may be performed in response to override(s) by a user.

Different types of training may be performed based on the type of ML/AI model and/or the expected output. For example, reinforcement learning includes a machine, an agent, etc., interacting with its environment, performing actions, and learning by a trial- and-error technique. In other examples, supervised training uses inputs and corresponding expected (e.g., labeled) outputs to select parameters (e.g., by iterating over combinations of select parameters) for the AI/ML model that reduce model error. As used herein, labelling refers to an expected output of the machine learning model (e.g., a classification, an expected output value, etc.). Alternatively, unsupervised training (e.g., used in deep learning, a subset of machine learning, etc.) involves inferring patterns from inputs to select parameters for the ML/AI model (e.g., without the benefit of expected (e.g., labeled) outputs). Additionally and/or alternatively, any other training technique may be used such as stochastic gradient descent, Simulated Annealing, Particle Swarm Optimization, Evolution Algorithms, Genetic Algorithms, and/or Nonlinear Conjugate Gradient.

Once training is complete, the ML system configurator 102 is deployed for use as an executable construct that processes an input and provides an output based on the network of nodes and connections defined in the model. For example, the ML system configurator 102 can be operated in an inference phase to process data. In the inference phase, data to be analyzed (e.g., live data, the workload(s) 216, etc.) is input to the ML system configurator 102, and the ML system configurator 102 executes to create an output. This inference phase can be thought of as the AI "thinking" to generate the output based on what it learned from the training, from the reinforcement learning, etc. In some examples, input data undergoes pre-processing before being used as an input to the ML system configurator 102. Moreover, in some examples, the output data may undergo post-processing after it is generated by the ML system configurator 102 to transform the output into a useful result (e.g., a compilation of the software 219, a generation of a configuration file associated with the hardware 221, etc.).

In some examples, the ML system configurator 102 of the illustrated example can be stored in memory of one or more computing systems or in a database of one or more remote computing systems. The ML system configurator 102 may then be executed by the one or more computing systems or one or more different computing systems.

In the illustrated example, the ML system configurator 102 can compose and/or otherwise lead to the compilation of the ML compute node 217 using reinforcement learning. However, any other AI/ML algorithm or technique may additionally or alternatively be used. In some examples, the ML system configurator 102 can iteratively generate the proposed HW/SW instance 222 until a level of error is no longer reducing and/or otherwise satisfies a threshold (e.g., an accuracy threshold, a training threshold, etc.). As used herein "threshold" is expressed as data such as a numerical value represented in any form, that may be used by processor circuitry as a reference for a comparison operation. As used herein, data is information in any form that may be ingested, processed, interpreted and/or otherwise manipulated by processor circuitry to produce a result. The produced result may itself be data. As used herein, a model is a set of instructions and/or data that may be ingested, processed, interpreted and/or otherwise manipulated by processor circuitry to produce a result. Often, a model is operated using input data to produce output data in accordance with one or more relationships reflected in the model. The model may be based on training data.

In some examples, the ML system configurator 102 utilizes Bayesian hyperparameter optimization to determine an optimal and/or otherwise improved or more efficient network and/or hardware architecture to avoid model overfitting and improve the overall applicability of the software 219 and/or the hardware 221 of the ML compute node 217. Alternatively, the ML system configurator 102 may use any other type of optimization.

In example operation, the controller 202 can receive a history of previous runs of the ML system configurator 102 for the type of the workload(s) 216 (or a different type of workload). The controller 202 can generate the software search space 218 by populating the software search space 218 with one or more AI/ML models that were used in the previous runs. In some examples, the controller 202 can populate the software search space 218 with one or more different type of AI/ML models based on the workload(s) 216. In the illustrated example, the software search space 216 includes one or more neural network (NN) algorithms and/or configuration(s) thereof. Additionally and/or alternatively, the software search space 216 may include any other type of AI/ML models, algorithms, etc. For example, the controller 202 can discover and/or otherwise identify one or more RNNs, one or more Transformers, etc., by inspecting and/or otherwise searching the composable building block databases 210.

In example operation, the controller 202 can generate the hardware search space 220 by populating the hardware search space 220 with one or more types of hardware and/or configuration(s) thereof that were used in the previous runs. In some examples, the controller 202 can populate the hardware search space 220 with one or more different type of AI/ML models based on the workload(s) 216. In the illustrated example, the hardware search space 220 includes one or more NN accelerators. Additionally and/or alternatively, the hardware search space 220 may include any other type of hardware (e.g., one or more CPUs, one or more FPGAs, etc.).

In example operation, the controller 202 can generate an example proposed HW/SW instance 222 and provide the proposed HW/SW instance 222 to the evaluator 204. In some examples, the proposed HW/SW instance 222 can implement a candidate or proposed ML compute node. For example, the proposed HW/SW instance 222 can be a composable ML compute node that is implemented by an NN accelerator having a first hardware configuration and an NN algorithm having a first software configuration.

In example operation, the evaluator 204 can execute example performance modeling 224 to generate and/or otherwise output example evaluation parameters 226. For example, the evaluator 204 can simulate, emulate, debug, etc., the proposed HW/SW instance 222 to generate the evaluation parameters 226. For example, the evaluation parameters 226 can be implemented by values of evaluation metrics representative of and/or otherwise indicative of accuracy, latency, a number of cycles to complete a workload, or throughput of the proposed HW/SW instance 222. In some examples, the evaluation parameters can be representative and/or otherwise indicative of a processor or clock frequency, a fabric frequency, a read memory bandwidth, a write memory bandwidth, hardware de-rate factors, a number of memory ports, a number of data processing units (DPUs), a number of model layers (e.g., neural network layers, convolution layers, etc.) an activation precision (e.g., a precision of activation values to be processed), a weight precision (e.g., a precision of weight values to be processed), etc., and/or any combination(s) thereof associated with the proposed HW/SW instance 222.

In some examples, the evaluator 204 can execute and/or otherwise instantiate analytics, software simulations, Register Transfer Level (RTL) simulations to validate the correctness of digital integrated circuit (IC) operation, emulations (e.g., an NN accelerator emulator), etc. In some such examples, the evaluator 204 can execute the performance modeling 224 by simulating, emulating, debugging, etc., the NN accelerator with the first hardware configuration when the NN accelerator executes the NN algorithm with the first software configuration. For example, the evaluator 204 can instantiate a simulation of the NN accelerator executing the NN algorithm to output the evaluation parameters 226. In some examples, the evaluator 204 can instantiate an emulation of the NN accelerator executing the NN algorithm to determine the evaluation parameters 226.

In example operation, the evaluator 204 can output an example reward function 228. In some examples, the reward function 228 can be implemented by a mathematical function that captures what is desired to be optimized (e.g., a mathematical function that includes higher weights for throughput to optimize throughput) and what is desired to be penalized (e.g., a mathematical function that includes lower weights for latency to optimize throughput at the expense of latency). For example, the reward function 228 can include one or more outputs (e.g., the evaluation parameters 226) from the evaluator 204. In some examples, the evaluator 204 can generate the reward function 228 to include at least a first output, such as accuracy, with a first weight and a second output, such as throughput, with a second weight. In some examples, the evaluation parameters 226 can be implemented using the first output (and/or the first weight) and the second output (and/or the second weight). The evaluator 204 can generate the first weight to be greater than the second weight to invoke and/or otherwise cause the controller 202 to increase an emphasis on increasing and/or otherwise optimizing accuracy and decrease an emphasis on increasing and/or otherwise optimizing the second output. In some examples, in response to obtaining the reward function 228, the controller 202 can change, modify, and/or otherwise adjust the proposed HW/SW instance 222 to increase accuracy and decrease throughput based on the respective first and second weights of the first and second outputs of the reward function 228. In some examples, the reward function 228 can be an accuracy of the proposed HW/SW instance 222 when executing the NN algorithm. In the illustrated example, the reward function 228 can correspond to an evaluation result that is provided and/or otherwise fed back to the controller 202 to update (e.g., iteratively update) the next version of the proposed HW/SW instance 222.

In example operation, the controller 202 can update the proposed HW/SW instance 222 based on the reward function 228. For example, the controller 202 can change the manufacturer model, configuration, etc., of the NN accelerator to maximize and/or otherwise increase the reward function 228. In some such examples, the controller 202 can modify hardware interconnections (e.g., input(s) and/or output(s)) of portion(s) of the NN accelerator, a configuration image (e.g., a value of one or more configuration registers of the NN accelerator), etc., and/or any combination(s) thereof. Alternatively, the controller 202 may replace the NN accelerator with a different type of hardware, such as a GPU. In some examples, the controller 202 can modify the NN algorithm based on the reward function 228. For example, the controller 202 can change a number of layers of the NN algorithm, value(s) of activation(s) and/or weight(s), interconnection(s) (e.g., input(s) and/or output(s)), etc., of the NN algorithm. Alternatively, the controller 202 may replace the NN algorithm with a different type of AI/ML algorithm, such as a Transformer.

In some examples, the controller 202 responsive to the reward function 228 being maximized and/or otherwise satisfying a threshold, such as a reward threshold, can output the proposed HW/SW instance 222 as the ML compute node 217 to execute the workload(s) 216. For example, the controller 202 can compile the software portion of the proposed HW/SW instance 222 as an executable construct (e.g., an executable file, a machine readable executable, etc.) to be executed on the hardware portion of the HW/SW instance 222.

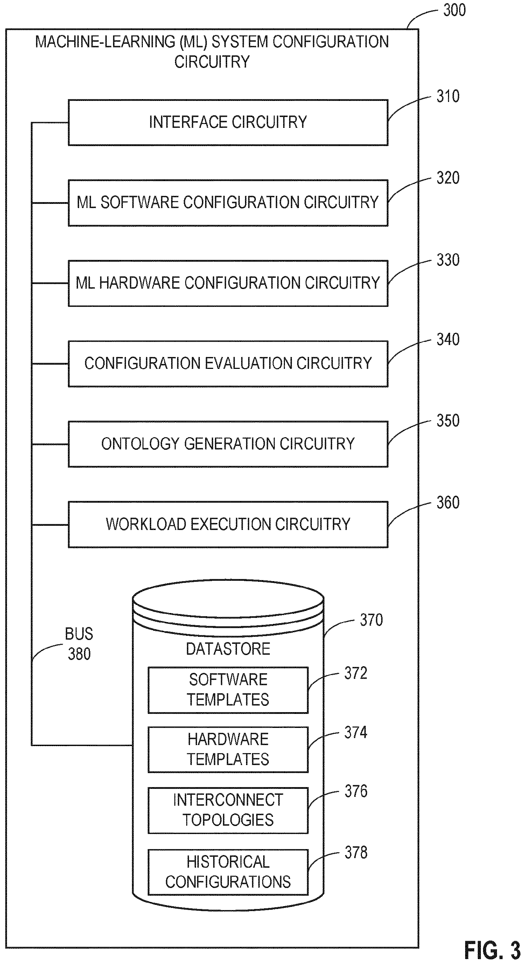

FIG. 3 is a block diagram of example ML system configuration circuitry 300 to compose an ML compute node (e.g., the ML compute node 217 of FIG. 2) to execute a workload (e.g., the workload(s) 216 of FIG. 2). In some examples, the ML system configuration circuitry 300 of FIG. 3 can implement the ML system configurator 102 of FIGS. 1 and/or 2. The ML system configuration circuitry 300 of FIG. 3 may be instantiated (e.g., creating an instance of, bring into being for any length of time, materialize, implement, etc.) by processor circuitry such as a CPU executing instructions. Additionally and/or alternatively, the ML system configuration circuitry 300 of FIG. 3 may be instantiated (e.g., creating an instance of, bring into being for any length of time, materialize, implement, etc.) by an ASIC or an FPGA structured to perform operations corresponding to the instructions. It should be understood that some or all of the ML system configuration circuitry 300 of FIG. 3 may, thus, be instantiated at the same or different times. Some or all of the ML system configuration circuitry 300 may be instantiated, for example, in one or more threads executing concurrently on hardware and/or in series on hardware. Moreover, in some examples, some or all of the ML system configuration circuitry 300 of FIG. 3 may be implemented by one or more virtual machines and/or containers executing on the microprocessor.

The ML system configuration circuitry 300 of the illustrated example includes example interface circuitry 310, example ML software configuration circuitry 320, example ML hardware configuration circuitry 330, example configuration evaluation circuitry 340, example ontology generation circuitry 350, example workload execution circuitry 360, an example datastore 370, and an example bus 380. The datastore 370 of the illustrated example includes example software templates 372, example hardware templates 374, example interconnect topologies 376, and example historical configurations 378.

In the illustrated example of FIG. 3, the interface circuitry 310, the ML software configuration circuitry 320, the ML hardware configuration circuitry 330, the configuration evaluation circuitry 340, the ontology generation circuitry 350, the workload execution circuitry 360, and the datastore 370 are in communication with the bus 380. For example, the bus 380 can be implemented by at least one of an Inter-Integrated Circuit (I2C) bus, a Serial Peripheral Interface (SPI) bus, a Peripheral Component Interconnect (PCI) bus, or a Peripheral Component Interconnect Express (PCIe or PCIE) bus. Additionally or alternatively, the bus 380 can be implemented by any other type of computing or electrical bus.

The ML system configuration circuitry 300 of the illustrated example of FIG. 3 includes the interface circuitry 310 to receive a request to execute an AI/ML workload. For example, the interface circuitry 310 can receive a request from a user, a computing or electronic system, etc., to compose an AutoML solution (e.g., a combination of hardware and/or software) based on the workload(s) 216. In some examples, the interface circuitry 310 can receive a request for an AI/ML model and corresponding hardware to execute an AI/ML workload. In some examples, the interface circuitry 310 can receive the AI/ML workload.

The ML system configuration circuitry 300 of the illustrated example of FIG. 3 includes the ML software configuration circuitry 320 to generate a first configuration of one or more models (e.g., one or more ML models, one or more AI/ML models, etc.) based on a workload. In some examples, the ML software configuration circuitry 320 can generate a software search space based on at least one of the request or historical configurations. For example, the ML software configuration circuitry 320 can populate and/or otherwise generate the software search space 218 to include one or more AI/ML models identified in at least one of the ontology database 208 or the composable building block databases 210. In some such examples, the ML software configuration circuitry 320 can generate the software search space 218 based on the workload(s) 216, or aspect(s) or portion(s) thereof.

In some examples, the ML software configuration circuitry 320 queries a configuration database with the workload using an API. For example, one(s) of the composable building block databases 210 can implement a configuration database, and the ML software configuration circuitry 320 can query the one(s) of the composable building block databases 210. In some such examples, the ML software configuration circuitry 320 can query the one(s) of the composable building block databases 210 with the workload(s) 216 or aspect(s) thereof as input(s).

In some examples, the ML software configuration circuitry 320 determines a number of layers for an AI/ML model. For example, the ML software configuration circuitry 320 can identify a CNN in the software templates 212, the software templates 372, etc. In some such examples, the ML software configuration circuitry 320 can determine a number of layers of the CNN

In some examples, the ML software configuration circuitry 320 determines weights for the layers of the AI/ML model. For example, the ML software configuration circuitry 320 can identify weight values that correspond to the CNN in the software templates 212. In some such examples, the ML software configuration circuitry 320 can utilize the weights identified in the software templates 212, determine new one(s) of the weights, adjust values of one(s) of the weights, etc., and/or any combination(s) thereof.

In some examples, the ML software configuration circuitry 320 determines a type of training for the AI/ML model. For example, the ML software configuration circuitry 320 can determine that reinforcement learning is associated with the CNN in the software templates 212. In some examples, the ML software configuration circuitry 320 can select a different type of training of the CNN such as stochastic gradient descent, Simulated Annealing, Particle Swarm Optimization, Evolution Algorithms, Genetic Algorithms, Nonlinear Conjugate Gradient, etc.

In some examples, the ML software configuration circuitry 320 determines hyperparameters to train the AI/ML model. For example, the ML software configuration circuitry 320 can identify hyperparameters, values of the hyperparameters, etc., that correspond to the CNN in the software templates 212. In some such examples, the ML software configuration circuitry 320 can utilize the hyperparameters identified in the software templates 212, determine new one(s) of the hyperparameters, adjust values of one(s) of the hyperparameters, etc., and/or any combination(s) thereof.

In some examples, the ML software configuration circuitry 320 determines whether another AI/ML model has been identified. For example, the ML software configuration circuitry 320 can determine that a Transformer model is identified in addition to the CNN. In some such examples, the ML software configuration circuitry 320 can determine that more than one AI/ML model has been identified, such as the CNN and the Transformer model. In some such examples, the ML software configuration circuitry 320 can generate a topology (e.g., an interconnection or interconnect topology, an input/output (I/O) topology, etc.) based on connection(s) between one(s) of the AI/ML models. For example, the ML software configuration circuitry 320 can select the CNN to be a first or primary model and the Transformer model to be a second or secondary model. For example, the ML software configuration circuitry 320 can determine that the CNN and the Transformer model can be coupled together by connecting output(s) of the CNN to input(s) of the Transformer model.

In some examples, the ML software configuration circuitry 320 adjusts the first configuration (e.g., a configuration of software to be included in the proposed HW/SW instance 222) based on an evaluation parameter. For example, the evaluator 204 can calculate and/or otherwise determine the evaluation parameters 226 based on an evaluation of the proposed HW/SW instance 222. In some such examples, the evaluator 204 can determine a first evaluation parameter of the evaluation parameters 226 to be an accuracy parameter (e.g., an accuracy of output(s) of the proposed HW/SW instance 222, an accuracy evaluation parameter, etc.).

In some examples, the ML software configuration circuitry 320 determines whether to replace a first AI/ML model with a different AI/ML model. For example, the ML software configuration circuitry 320 can determine to replace the CNN with a different model, such as an ANN, a DNN, etc. In some such examples, the ML software configuration circuitry 320 can determine to replace the CNN based on a value of the accuracy parameter in an effort to increase and/or otherwise improve the value. In some examples, in response to a determination to replace the first AI/ML model with a different AI/ML model, the ML software configuration circuitry 320 can identify a second ML model in a configuration database. For example, the ML software configuration circuitry 320 can identify the ANN, the DNN, etc., in the software templates 212. In some examples, the ML software configuration circuitry 320 generates a new configuration based on the replacement of the first AI/ML model with the second AI/ML model. For example, the ML software configuration circuitry 320 can generate a new, updated, etc., version of the proposed HW/SW instance 222 based on the replacement of the CNN with a different AI/ML model.

In some examples, the ML software configuration circuitry 320 can determine to add a second AI/ML model to the configuration. For example, the ML software configuration circuitry 320 can determine to add another AI/ML model, such as an ANN, a DNN, etc., in connection with the CNN. In some such examples, the ML software configuration circuitry 320 can determine to add another AI/ML model based on a value of an evaluation parameter, such as a value of the accuracy parameter. In some examples, the ML software configuration circuitry 320 can identify a second AI/ML model to add to the configuration by identifying the second AI/ML model in the software templates 212, and/or, more generally, in the composable building block databases 210.

In some examples, in response to a determination to add another AI/ML model to a configuration of the proposed HW/SW instance 222, the ML software configuration circuitry 320 determines one or more first layers of the first AI/ML model to execute a first portion of a workload and one or more second layers of the second AI/ML model to execute a second portion of the workload. For example, the ML software configuration circuitry 320 can identify (or select) one or more first layers of the CNN to execute a first portion of the workload(s) 216 and identify (or select) one or more second layers of the ANN, the DNN, etc., to execute a second portion of the workload(s) 216. In some examples, the ML software configuration circuitry 320 can determine a new configuration based on a topology of the one or more first layers and the one or more second layers. For example, the ML software configuration circuitry 320 can determine a new and/or updated instance, version, etc., of the proposed HW/SW instance 222 based on a topology that couples the first AI/ML model and the second AI/ML model.

The ML system configuration circuitry 300 of the illustrated example of FIG. 3 includes the ML hardware configuration circuitry 330 to generate a second configuration of hardware based on an AI/ML workload. In some examples, the ML hardware configuration circuitry 330 can query a configuration database with the AI/ML workload using an API. For example, one(s) of the composable building block databases 210 can implement a configuration database, and the ML hardware configuration circuitry 330 can query the one(s) of the composable building block databases 210. In some such examples, the ML hardware configuration circuitry 330 can query the one(s) of the composable building block databases 210 with the workload(s) 216 or aspect(s) thereof as input(s).

In some examples, the ML hardware configuration circuitry 330 can identify a first block (or portion) of hardware to execute a matrix-matrix workload. For example, the workload(s) 216 can include a matrix-matrix computational operation, a vector-vector computational operation, a matrix-vector computational operation, etc., and/or any combination(s) thereof. In some examples, the ML hardware configuration circuitry 330 can identify a first kernel of a GPU (or other hardware) to execute the matrix-matrix workload. In some such examples, the ML hardware configuration circuitry 330 can identify the first kernel, and/or, more generally, the GPU, in one of the hardware templates 214, the hardware templates 374, etc.

In some examples, the ML hardware configuration circuitry 330 can identify a second block (or portion) of the hardware to execute a vector-vector workload. For example, the ML hardware configuration circuitry 330 can identify a second kernel of the GPU (or other hardware) to execute the vector-vector workload. In some such examples, the ML hardware configuration circuitry 330 can identify the second kernel, and/or, more generally, the GPU, in one of the hardware templates 214.

In some examples, the ML hardware configuration circuitry 330 can identify a third block (or portion) of the hardware to execute a matrix-vector workload. For example, the ML hardware configuration circuitry 330 can identify a third kernel of the GPU (or other hardware) to execute the matrix-vector workload. In some such examples, the ML hardware configuration circuitry 330 can identify the third kernel, and/or, more generally, the GPU, in one of the hardware templates 214.

In some examples, the ML hardware configuration circuitry 330 can identify a register file to configure respective ones of the first block, the second block, and/or the third block. For example, the ML hardware configuration circuitry 330 can identify a register file associated with the GPU, and the register file can be identified in one of the hardware templates 214. In some such examples, the register file can include a first configuration to configure the first kernel of the GPU, a second configuration to configure the second kernel of the GPU, and/or a third configuration to configure the third kernel of the GPU.

In some examples, the ML hardware configuration circuitry 330 determines whether another type of hardware and/or another instance of the hardware has been identified. For example, the ML hardware configuration circuitry 330 can determine that another instance of the GPU is identified in addition to the first instance of the GPU. In some examples, the ML hardware configuration circuitry 330 can determine that a different type of hardware, such as an AI processor, has been identified in the hardware templates 214. In some such examples, the ML hardware configuration circuitry 330 can generate a topology (e.g., an interconnection or interconnect topology, an input/output (I/O) topology, the one(s) of the interconnect topologies 376, etc.) based on connection(s) between one(s) of the first GPU and the second GPU or the AI processor. For example, the ML hardware configuration circuitry 330 can select the first GPU to be a first or primary hardware and the second GPU or the AI processor to be a second or secondary hardware. For example, the ML hardware configuration circuitry 330 can determine that the first GPU and the second GPU or the AI processor can be coupled together by connecting output(s) of the first GPU to input(s) of the second GPU or the AI processor.

In some examples, the ML hardware configuration circuitry 330 adjusts the second configuration (e.g., a configuration of hardware to be included in the proposed HW/SW instance 222) based on an evaluation parameter. For example, the evaluator 204 can calculate and/or otherwise determine the evaluation parameters 226 based on an evaluation of the proposed HW/SW instance 222. In some such examples, the evaluator 204 can determine a first evaluation parameter of the evaluation parameters 226 to be a throughput parameter (e.g., a throughput of output(s) of the proposed HW/SW instance 222, a throughput evaluation parameter, etc.).

In some examples, the ML hardware configuration circuitry 330 determines whether to replace first hardware with different hardware. For example, the ML hardware configuration circuitry 330 can determine to replace the GPU with different hardware, such as a CPU, an AI processor, an FPGA, etc. In some such examples, the ML hardware configuration circuitry 330 can determine to replace the GPU based on a value of the throughput parameter in an effort to increase and/or otherwise improve the value. In some examples, in response to a determination to replace the first hardware with different hardware, the ML hardware configuration circuitry 330 can identify second hardware in a configuration database. For example, the ML hardware configuration circuitry 330 can identify the CPU, the AI processor, the FPGA, etc., in the hardware templates 214. In some examples, the ML hardware configuration circuitry 330 generates a new configuration based on the replacement of the first hardware with the second hardware. For example, the ML hardware configuration circuitry 330 can generate a new, updated, etc., version of the proposed HW/SW instance 222 based on the replacement of the GPU with different hardware.

In some examples, the ML hardware configuration circuitry 330 can determine to add second hardware to the configuration. For example, the ML hardware configuration circuitry 330 can determine to add additional hardware, such as a CPU, another GPU, an AI processor, an FPGA, etc., in connection with the first GPU. In some such examples, the ML hardware configuration circuitry 330 can determine to add additional hardware based on a value of an evaluation parameter, such as a value of the throughput parameter. In some examples, the ML hardware configuration circuitry 330 can identify second hardware to add to the configuration by identifying the second hardware in the hardware templates 214, and/or, more generally, in the composable building block databases 210.

In some examples, in response to a determination to add hardware to a configuration of the proposed HW/SW instance 222, the ML hardware configuration circuitry 330 determines one or more first portions of the first hardware to execute a first portion of a workload and one or more second portions of the second hardware to execute a second portion of the workload. For example, the ML hardware configuration circuitry 330 can identify (or select) one or more first kernels of the first GPU to execute a first portion of the workload(s) 216 and identify (or select) one or more second kernels of the second GPU, the AI processor, the CPU, the FPGA, etc., to execute a second portion of the workload(s) 216. In some examples, the ML hardware configuration circuitry 330 can determine a new configuration based on a topology of the one or more first portions and the one or more second portions. For example, the ML hardware configuration circuitry 330 can determine a new and/or updated instance, version, etc., of the proposed HW/SW instance 222 based on a topology that couples the first hardware and the second hardware.

The ML system configuration circuitry 300 of the illustrated example of FIG. 3 includes the configuration evaluation circuitry 340 to generate an evaluation parameter based on an execution of a workload based on a first configuration and a second configuration. For example, the configuration evaluation circuitry 340 can generate the evaluation parameters 226. In some such examples, the configuration evaluation circuitry 340 can generate the evaluation parameters 226 in response to emulating, simulating, etc., an execution of the workload(s) 216 (or a different workload) utilizing the proposed HW/SW instance 222. In some such examples, the configuration evaluation circuitry 340 can evaluate the proposed HW/SW instance 222 based on a first configuration of software (e.g., one or more AI/ML models) and a second configuration of hardware (e.g., one or more instances and/or types of hardware) that compose the proposed HW/SW instance 222.

In some examples, the configuration evaluation circuitry 340 can determine whether an evaluation parameter satisfies a threshold. For example, the configuration evaluation circuitry 340 can determine whether a first value of an accuracy parameter satisfies an accuracy threshold. In some such examples, the configuration evaluation circuitry 340 can determine that the first value satisfies the accuracy threshold in response to a determination that the first value is greater than the accuracy threshold. For example, the configuration evaluation circuitry 340 can determine that an accuracy parameter of 40% does not satisfy an accuracy threshold of 90% because 40% is less than 90%. In some examples, the configuration evaluation circuitry 340 can determine that an accuracy parameter of 95% satisfies an accuracy threshold of 90% because 95% is greater than 90%. Additionally or alternatively, the configuration evaluation circuitry 340 may determine whether one or more other evaluation parameters (e.g., a latency parameter, a throughput parameter, etc.) satisfies one or more respective evaluation thresholds (e.g., a latency threshold, a throughput threshold, etc.).

The ML system configuration circuitry 300 of the illustrated example of FIG. 3 includes the ontology generation circuitry 350 to generate, update, and/or otherwise maintain an ontology database. In some examples, the ontology generation circuitry 350 generates the ontology database 208 based on at least one of the composable building block databases 210 or the application store 215. In some such examples, the ontology generation circuitry 350 can generate the ontology database 208 by including associations between different AI/ML models, configuration(s) thereof, types of AI/ML workload(s), etc., and/or any combination(s) thereof. In some such examples, the associations can be implemented by an identifier, a variable, a pointer, etc., or any other identification data structure. In some examples, the ontology generation circuitry 350 can update the ontology database 208 based on the proposed HW/SW instance 222, historical configurations such as the historical configurations 378, the evaluation parameters 226, the reward function 228, etc., and/or any combination(s) thereof. For example, the ontology generation circuitry 350 can update the ontology database 208 based on previous versions of the proposed HW/SW instance 222, one(s) of the evaluation parameters 226 associated therewith, etc.

In some examples, the ontology generation circuitry 350 identifies an AI/ML model based on historical configurations. For example, the ontology generation circuitry 350 can identify an AI/ML model, such as an NN, based on previously generated ML compute nodes, proposed HW/SW instances, etc., and/or any combination(s) thereof. In some examples, the ontology generation circuitry 350 identifies hardware based on historical configurations, such as the historical configurations 378. For example, the ontology generation circuitry 350 can identify hardware, such as a GPU, based on previously generated ML compute nodes, proposed HW/SW instances, etc., and/or any combination(s) thereof.

The ML system configuration circuitry 300 of the illustrated example of FIG. 3 includes the workload execution circuitry 360 to deploy compute node(s) to execute a workload. For example, the workload execution circuitry 360 can deploy the ML compute node 217 to execute the workload(s) 216. In some such examples, the workload execution circuitry 360 can deploy the ML compute node 217 in response to one or more evaluation parameters satisfying one or more respective thresholds. In some examples, the workload execution circuitry 360 can deploy the ML compute node 217 by compiling the software 219 using a software configuration determined by the ML software configuration circuitry 320. In some examples, the workload execution circuitry 360 can deploy the ML compute node 217 by configuring the hardware 221 using a hardware configuration determined by the ML hardware configuration circuitry 330. In some such examples, the workload execution circuitry 360 can execute one or more AI/ML models, which may be implemented by the software 219, based on the software configuration and the hardware configuration.

The ML system configuration circuitry 300 of the illustrated example of FIG. 3 includes the datastore 370 to record data (e.g., the software templates 372, the hardware templates 374, the interconnect topologies 376, the historical configurations 378, etc.). The datastore 370 can be implemented by a volatile memory (e.g., a Synchronous Dynamic Random Access Memory (SDRAM), Dynamic Random Access Memory (DRAM), RAMBUS Dynamic Random Access Memory (RDRAM), etc.) and/or a non-volatile memory (e.g., electrically erasable programmable read-only memory (EEPROM), FLASH memory, a hard disk drive (HDD), a solid-state disk (SSD) drive, etc.). The datastore 370 may additionally or alternatively be implemented by one or more double data rate (DDR) memories, such as DDR, DDR2, DDR3, DDR4, DDR5, mobile DDR (mDDR), DDR SDRAM, etc. The datastore 370 may additionally or alternatively be implemented by one or more mass storage devices such as HDD(s), compact disk (CD) drive(s), digital versatile disk (DVD) drive(s), SSD drive(s), Secure Digital (SD) card(s), CompactFlash (CF) card(s), etc. While in the illustrated example the datastore 370 is illustrated as a single datastore, the datastore 370 may be implemented by any number and/or type(s) of datastores. Furthermore, the data stored in the datastore 370 can be in any data format such as, for example, binary data, comma delimited data, tab delimited data, structured query language (SQL) structures, etc. In some examples, the datastore 370 can include and/or otherwise implement one or more databases. The term "database" as used herein means an organized body of related data, regardless of the manner in which the data or the organized body thereof is represented. For example, the organized body of related data may be in the form of one or more of a table, a map, a grid, a packet, a datagram, a frame, a file, a document, a report, a list or in any other form.

In some examples, the software templates 372 can be implemented by the software templates 212 of FIG. 2. For example, the software templates 372 can include a first template corresponding to a first type of AI/ML model (e.g., a NN such as an ANN, a CNN, a DNN, an RNN, etc.) and/or configuration(s) associated thereof. In some such examples, the software templates 372 can include a second template corresponding to a second type of AI/ML model (e.g., a Transformer model) and/or configuration(s) thereof, a third type of AI/ML model (e.g., a reinforcement learning model) and/or configuration(s) thereof, etc.

In some examples, the hardware templates 374 can be implemented by the hardware templates 214 of FIG. 2. For example, the hardware templates 374 can include a first template corresponding to a first type of hardware (e.g., a CPU, etc.) and/or configuration(s) associated thereof, a second template corresponding to a second type of hardware (e.g., a GPU) and/or configuration(s) thereof, a third type of hardware (e.g., an AI processor) and/or configuration(s) thereof, etc.

In some examples, the interconnect topologies 376 can be implemented by portion(s) of the software templates 212 and/or the hardware templates 214. For example, the interconnect topologies 376 can include AI/ML network topologies (e.g., layer configurations, etc.), model input(s), model output(s), etc. In some such examples, the AI/ML network topologies, the model input(s), the model output(s), etc., can be included in portion(s) of the software templates 212. In some examples, the interconnect topologies 376 can include hardware architectural topologies (e.g., kernel couplings, printed circuit board layouts, etc.), input(s) (e.g., bare metal input(s), interface(s), etc.), output(s) (e.g., bare metal output(s), interface(s), etc.), etc. In some such examples, the hardware architectural topologies, the input(s), the output(s), etc., can be included in portion(s) of the hardware templates 214.

In some examples, the historical configurations 378 can be implemented by portion(s) of the ontology database 208, and/or, more generally, the ontology database 208. For example, the historical configurations 378 can include previously generated, determined, identified, etc., ML compute nodes, proposed HW/SW instances, workload(s), etc., and/or any combination(s) thereof. In some examples, the historical configurations 378 can include occurrences or other statistics associated with hardware and/or software kernels in ML compute nodes.

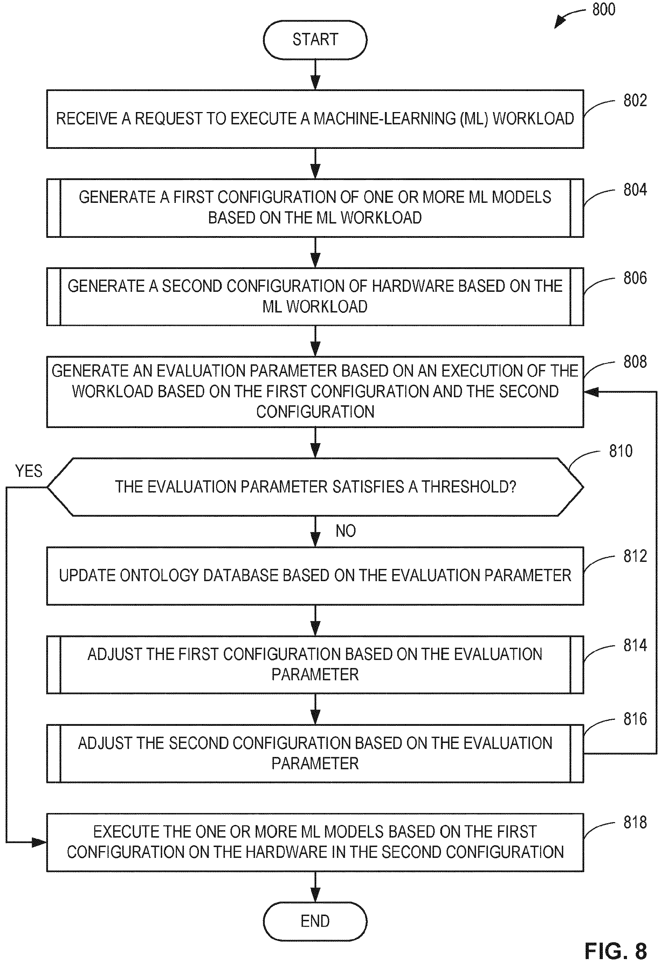

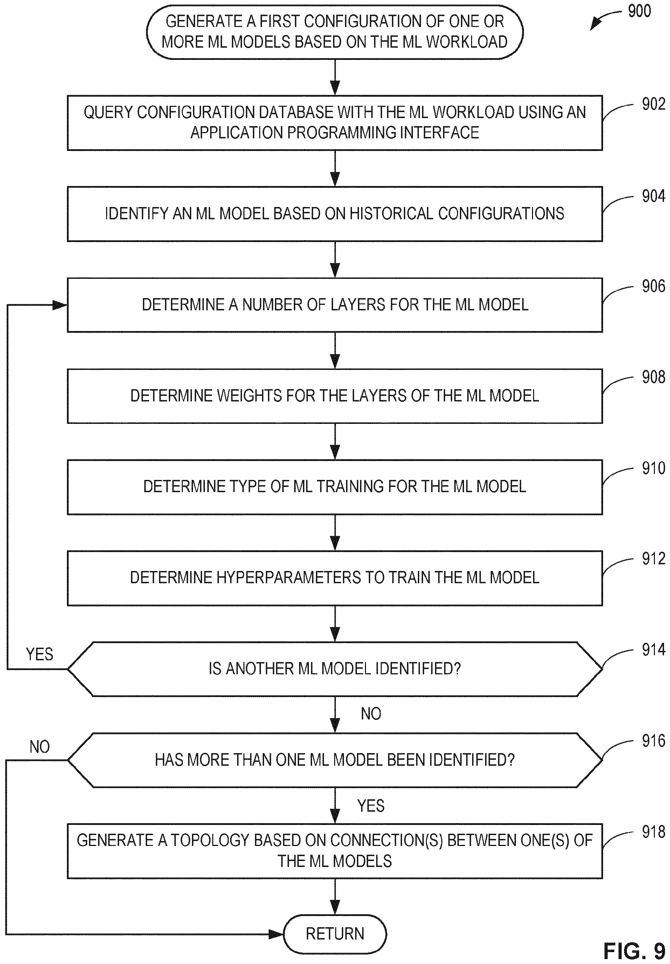

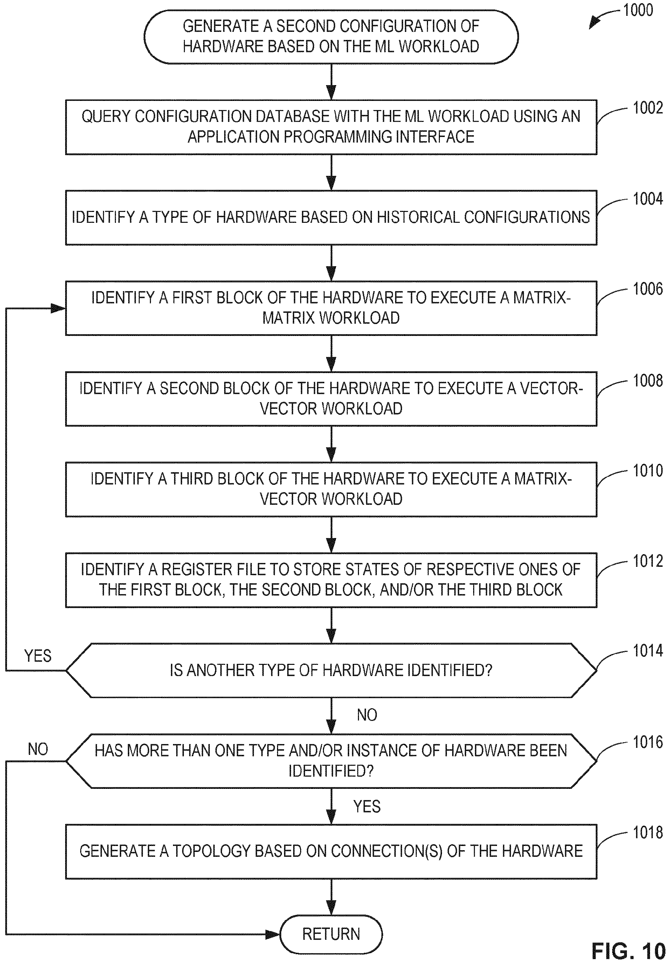

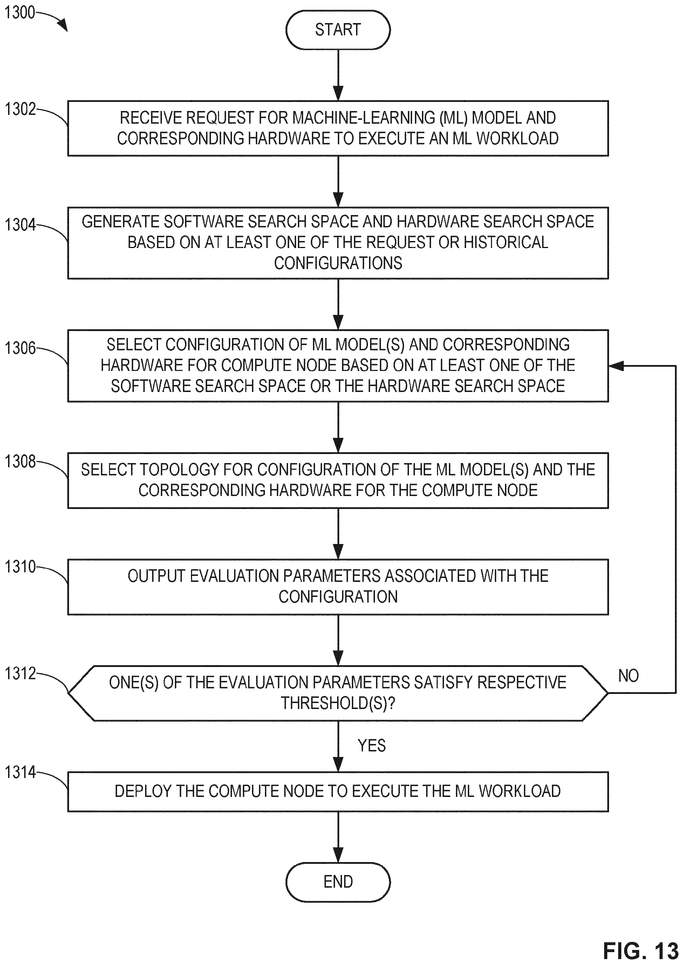

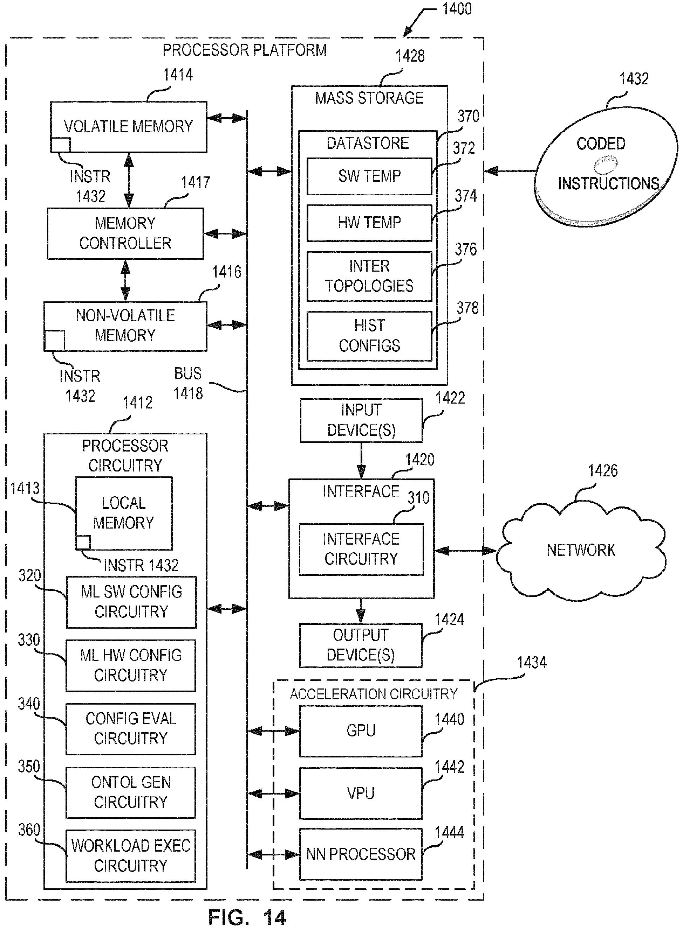

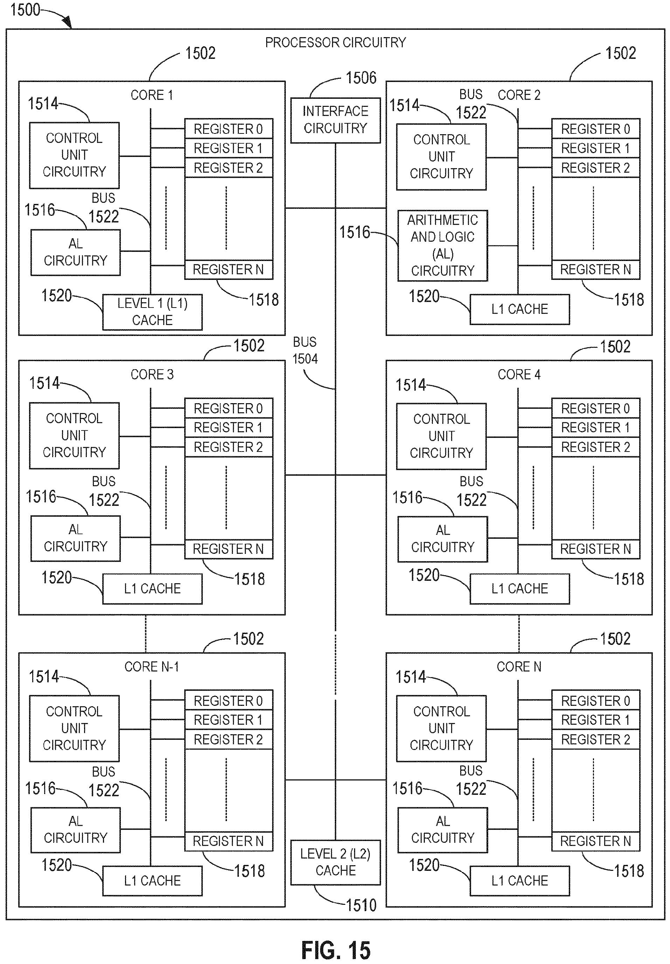

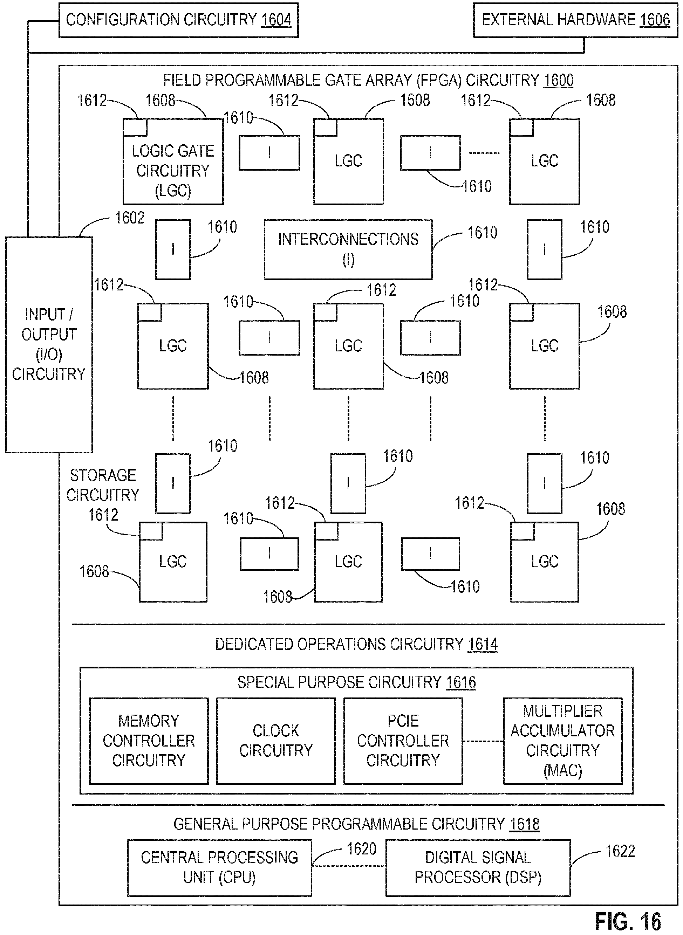

In some examples, the ML system configuration circuitry 300 includes means for receiving a workload. For example, the means for receiving may be implemented by the interface circuitry 310. In some examples, the interface circuitry 310 may be instantiated by processor circuitry such as the example processor circuitry 1412 of FIG. 14. For instance, the interface circuitry 310 may be instantiated by the example general purpose processor circuitry 1500 of FIG. 15 executing machine executable instructions such as that implemented by at least block 802 of FIG. 8, block 902 of FIG. 9, block 1002 of FIG. 10, and block 1302 of FIG. 13. In some examples, the interface circuitry 310 may be instantiated by hardware logic circuitry, which may be implemented by an ASIC or the FPGA circuitry 1600 of FIG. 16 structured to perform operations corresponding to the machine readable instructions. Additionally or alternatively, the interface circuitry 310 may be instantiated by any other combination of hardware, software, and/or firmware. For example, the interface circuitry 310 may be implemented by at least one or more hardware circuits (e.g., processor circuitry, discrete and/or integrated analog and/or digital circuitry, an FPGA, an ASIC, a comparator, an operational-amplifier (op-amp), a logic circuit, etc.), a transmitter, a receiver, a transceiver, a modem, a residential gateway, a wireless access point, and/or a network interface of any kind structured to execute some or all of the machine readable instructions and/or to perform some or all of the operations corresponding to the machine readable instructions without executing software or firmware, but other structures are likewise appropriate.

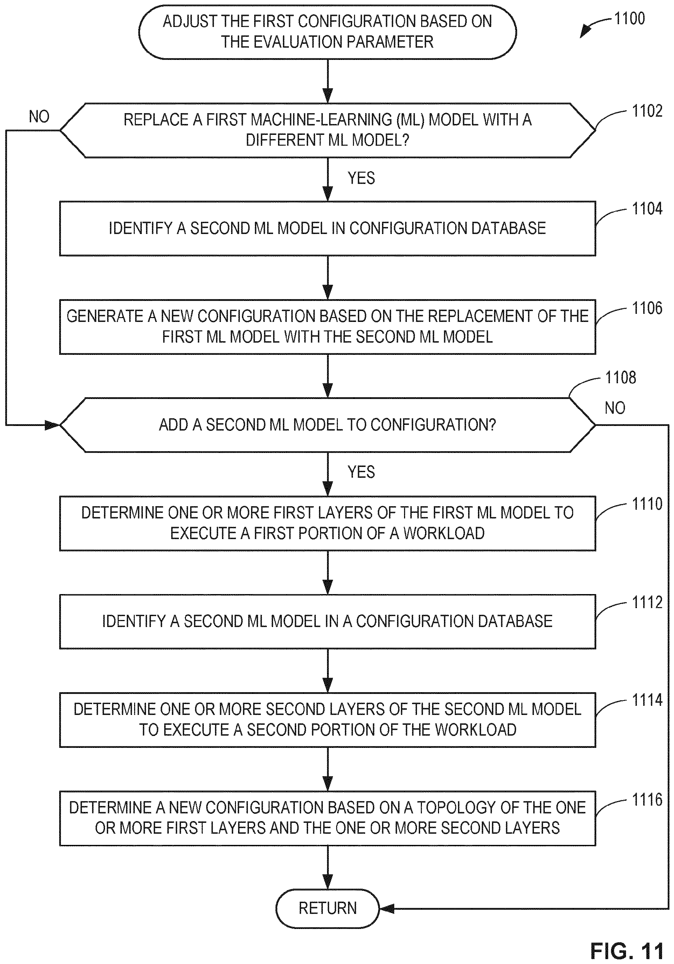

In some examples, the ML system configuration circuitry 300 includes first means for generating a first configuration of one or more machine-learning models based on a workload. In some such examples, the first configuration is stored in a first configuration database, the first configuration database includes a plurality of machine-learning models, and the plurality of the machine-learning models including the one or more machine-learning models. For example, the first means for generating may be implemented by the ML software configuration circuitry 320. In some examples, the ML software configuration circuitry 320 may be instantiated by processor circuitry such as the example processor circuitry 1412 of FIG. 14. For instance, the ML software configuration circuitry 320 may be instantiated by the example general purpose processor circuitry 1500 of FIG. 15 executing machine executable instructions such as that implemented by at least blocks 804 and 814 of FIG. 8, blocks 902, 906, 908, 910, 912, 914, 916, and 918 of FIG. 9, blocks 1102, 1104, 1106, 1108, 1110, 1112, 1114, and 1116 of FIG. 11, and blocks 1304, 1306, and 1308 of FIG. 13. In some examples, the ML software configuration circuitry 320 may be instantiated by hardware logic circuitry, which may be implemented by an ASIC or the FPGA circuitry 1600 of FIG. 16 structured to perform operations corresponding to the machine readable instructions. Additionally or alternatively, the ML software configuration circuitry 320 may be instantiated by any other combination of hardware, software, and/or firmware. For example, the ML software configuration circuitry 320 may be implemented by at least one or more hardware circuits (e.g., processor circuitry, discrete and/or integrated analog and/or digital circuitry, an FPGA, an ASIC, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples in which the one or more machine-learning models include a first machine-learning model, the first means for generating is to, in response to the evaluation parameter not satisfying the threshold, identify a second machine-learning model in the first configuration database, generate a third configuration of the second machine-learning model, determine the evaluation parameter based on an execution of the workload based on the third configuration, and deploy the second machine-learning model to execute the workload based on the third configuration.

In some examples in which the one or more machine-learning models include a first machine-learning model, the first means for generating is to, in response to the evaluation parameter not satisfying the threshold, determine one or more first layers of the first machine-learning model to execute a first portion of the workload, identify a second machine-learning model in the first configuration database, determine one or more second layers of the second machine-learning model to execute a second portion of the workload, and determine a third configuration based on a topology of the one or more first layers and the one or more second layers, the topology based on an output from the one or more first layers as an input to the one or more second layers.

In some examples in which the one or more machine-learning models include a first machine-learning model, the first means for generating is to identify the first machine-learning model in the first configuration database, identify a second machine-learning model based on a query of an ontology database with an identifier of the first machine-learning model as an input, the ontology database including an association of the first machine-learning model and the second machine-learning model, and in response to the evaluation parameter satisfying the threshold, update the ontology database based on the first configuration.

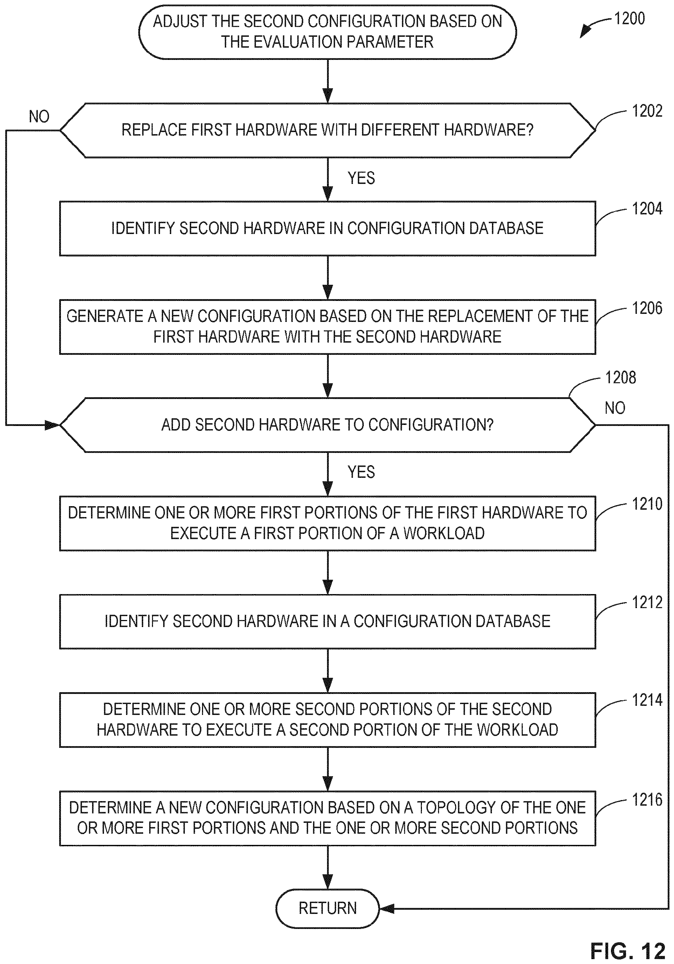

In some examples, the ML system configuration circuitry 300 includes second means for generating a second configuration of hardware. In some such examples, the second configuration is stored in a second configuration database, the second configuration database includes one or more portions of a plurality of hardware, and the plurality of the hardware including the hardware. For example, the second means for generating may be implemented by the ML hardware configuration circuitry 330. In some examples, the ML hardware configuration circuitry 330 may be instantiated by processor circuitry such as the example processor circuitry 1412 of FIG. 14. For instance, the ML hardware configuration circuitry 330 may be instantiated by the example general purpose processor circuitry 1500 of FIG. 15 executing machine executable instructions such as that implemented by at least blocks 806 and 816 of FIG. 8, blocks 1002, 1006, 1008, 1010, 1012, 1014, 1016, and 1018 of FIG. 10, blocks 1202, 1204, 1206, 1208, 1210, 1212, 1214, and 1216 of FIG. 12, and blocks 1304, 1306, and 1308 of FIG. 13. In some examples, the ML hardware configuration circuitry 330 may be instantiated by hardware logic circuitry, which may be implemented by an ASIC or the FPGA circuitry 1600 of FIG. 16 structured to perform operations corresponding to the machine readable instructions. Additionally or alternatively, the ML hardware configuration circuitry 330 may be instantiated by any other combination of hardware, software, and/or firmware. For example, the ML hardware configuration circuitry 330 may be implemented by at least one or more hardware circuits (e.g., processor circuitry, discrete and/or integrated analog and/or digital circuitry, an FPGA, an ASIC, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples in which the one or more portions include at least one of a first block, a second block, or a third block, the second means for generating is to identify the first block of the hardware to execute a matrix-matrix workload, identify the second block of the hardware to execute a vector-vector workload, identify the third block of the hardware to execute a matrix-vector workload, and identify register files for respective ones of the first block, the second block, and the third block, the register files to store states for the respective ones of the first block, the second block, and the third block, the second configuration based on a topology including at least one of the first block, the second block, or the third block.

In some examples in which the hardware is first hardware, the second means for generating is to, in response to the evaluation parameter not satisfying the threshold, identify second hardware in the second configuration database, generate a third configuration of the second hardware, determine the evaluation parameter based on an execution of the workload by the second hardware in the third configuration, and deploy the second hardware with the third configuration to execute the one or more machine-learning models to execute the workload.

In some examples in which the hardware is first hardware, the second means for generating is to, in response to the evaluation parameter not satisfying the threshold, determine one or more first portions of the first hardware to execute a first portion of the workload, identify second hardware in the first configuration database, determine one or more second portions of the second hardware to execute a second portion of the workload, and determine a third configuration based on a topology of the one or more first portions and the one or more second portions, the topology based on an output from the one or more first portions as an input to the one or more second portions.

In some examples, the ML system configuration circuitry 300 includes means for determining an evaluation parameter based on an execution of a workload. In some such examples, the execution of the workload is based on a first configuration of one or more machine-learning models and a second configuration of hardware. In some such examples, the second configuration is stored in a second configuration database, the second configuration database includes one or more portions of a plurality of hardware, and the plurality of the hardware including the hardware. In some examples in which the evaluation parameter is a first evaluation parameter, the means for determining is to determine a reward function including the first evaluation parameter with a first weight and a second evaluation parameter with a second weight, the first weight greater than the second weight, and, in response to determining that at least one of the first evaluation parameter or the second evaluation parameter does not satisfy the threshold, change at least one of the first configuration or the second configuration to at least one of increase the first evaluation parameter or decrease the second evaluation parameter. For example, the means for determining may be implemented by the configuration evaluation circuitry 340. In some examples, the configuration evaluation circuitry 340 may be instantiated by processor circuitry such as the example processor circuitry 1412 of FIG. 14. For instance, the configuration evaluation circuitry 340 may be instantiated by the example general purpose processor circuitry 1500 of FIG. 15 executing machine executable instructions such as that implemented by at least blocks 808 and 810 of FIG. 8 and blocks 1310 and 1312 of FIG. 13. In some examples, the configuration evaluation circuitry 340 may be instantiated by hardware logic circuitry, which may be implemented by an ASIC or the FPGA circuitry 1600 of FIG. 16 structured to perform operations corresponding to the machine readable instructions. Additionally or alternatively, the configuration evaluation circuitry 340 may be instantiated by any other combination of hardware, software, and/or firmware. For example, the configuration evaluation circuitry 340 may be implemented by at least one or more hardware circuits (e.g., processor circuitry, discrete and/or integrated analog and/or digital circuitry, an FPGA, an ASIC, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the ML system configuration circuitry 300 includes means for generating, maintaining, and/or updating an ontology database based on an evaluation parameter. For example, the means for generating, maintaining, and/or updating may be implemented by the ontology generation circuitry 350. In some examples, the ontology generation circuitry 350 may be instantiated by processor circuitry such as the example processor circuitry 1412 of FIG. 14. For instance, the ontology generation circuitry 350 may be instantiated by the example general purpose processor circuitry 1500 of FIG. 15 executing machine executable instructions such as that implemented by at least block 812 of FIG. 8, block 904 of FIG. 9, block 1004 of FIG. 10, and block 1304 of FIG. 13. In some examples, the ontology generation circuitry 350 may be instantiated by hardware logic circuitry, which may be implemented by an ASIC or the FPGA circuitry 1600 of FIG. 16 structured to perform operations corresponding to the machine readable instructions. Additionally or alternatively, the ontology generation circuitry 350 may be instantiated by any other combination of hardware, software, and/or firmware. For example, the ontology generation circuitry 350 may be implemented by at least one or more hardware circuits (e.g., processor circuitry, discrete and/or integrated analog and/or digital circuitry, an FPGA, an ASIC, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the ML system configuration circuitry 300 includes means for executing one or more machine-learning models in a first configuration on hardware in a second configuration. In some such examples, the executing is in response to an evaluation parameter satisfying a threshold. In some such examples, the one or more machine-learning models and the hardware are to execute a workload. For example, the means for executing may be implemented by the workload execution circuitry 360. In some examples, the workload execution circuitry 360 may be instantiated by processor circuitry such as the example processor circuitry 1412 of FIG. 14. For instance, the configuration evaluation circuitry 340 may be instantiated by the example general purpose processor circuitry 1500 of FIG. 15 executing machine executable instructions such as that implemented by at least blocks 818 of FIG. 8 and block 1314 of FIG. 13. In some examples, the workload execution circuitry 360 may be instantiated by hardware logic circuitry, which may be implemented by an ASIC or the FPGA circuitry 1600 of FIG. 16 structured to perform operations corresponding to the machine readable instructions. Additionally or alternatively, the workload execution circuitry 360 may be instantiated by any other combination of hardware, software, and/or firmware. For example, the workload execution circuitry 360 may be implemented by at least one or more hardware circuits (e.g., processor circuitry, discrete and/or integrated analog and/or digital circuitry, an FPGA, an ASIC, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the ML system configuration circuitry 300 includes means for storing data. In some examples, the data can include the software templates 372, the hardware templates 374, the interconnect topologies 376, the historical configurations 378, or any other data described herein. For example, the means for storing may be implemented by the datastore 370. In some examples, the datastore 370 may be instantiated by processor circuitry such as the example processor circuitry 1412 of FIG. 14. For instance, the datastore 370 may be instantiated by the general purpose processor circuitry 1500 of FIG. 15 executing machine executable instructions. In some examples, the datastore 370 may be instantiated by hardware logic circuitry, which may be implemented by an ASIC or the FPGA circuitry 1600 of FIG. 16 structured to perform operations corresponding to the machine readable instructions. Additionally or alternatively, the datastore 370 may be instantiated by any other combination of hardware, software, and/or firmware. For example, the datastore 370 may be implemented by one or more mass storage devices (e.g., the one or more mass storage devices 1428 of FIG. 14), one or more hardware circuits (e.g., processor circuitry, discrete and/or integrated analog and/or digital circuitry, an FPGA, an ASIC, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

While an example manner of implementing the ML system configurator 102 of FIGS. 1 and/or 2 is illustrated in FIG. 3, one or more of the elements, processes, and/or devices illustrated in FIG. 3 may be combined, divided, re-arranged, omitted, eliminated, and/or implemented in any other way. Further, the example interface circuitry 310, the example ML software configuration circuitry 320, the example ML hardware configuration circuitry 330, the example configuration evaluation circuitry 340, the example ontology generation circuitry 350, the example workload execution circuitry 360, the example datastore 370, the example bus 380, and/or, more generally, the example ML system configurator 102 of FIGS. 1 and/or 2, may be implemented by hardware alone or by hardware in combination with software and/or firmware. Thus, for example, any of the example interface circuitry 310, the example ML software configuration circuitry 320, the example ML hardware configuration circuitry 330, the example configuration evaluation circuitry 340, the example ontology generation circuitry 350, the example workload execution circuitry 360, the example datastore 370, the example bus 380, and/or, more generally, the example ML system configurator 102, could be implemented by processor circuitry, analog circuit(s), digital circuit(s), logic circuit(s), programmable processor(s), programmable microcontroller(s), GPU(s), DSP(s), ASIC(s), programmable logic device(s) (PLD(s)), and/or field programmable logic device(s) (FPLD(s)) such as FPGAs. Further still, the example ML system configurator 102 of FIGS. 1 and/or 2 may include one or more elements, processes, and/or devices in addition to, or instead of, those illustrated in FIG. 3, and/or may include more than one of any or all of the illustrated elements, processes and devices.

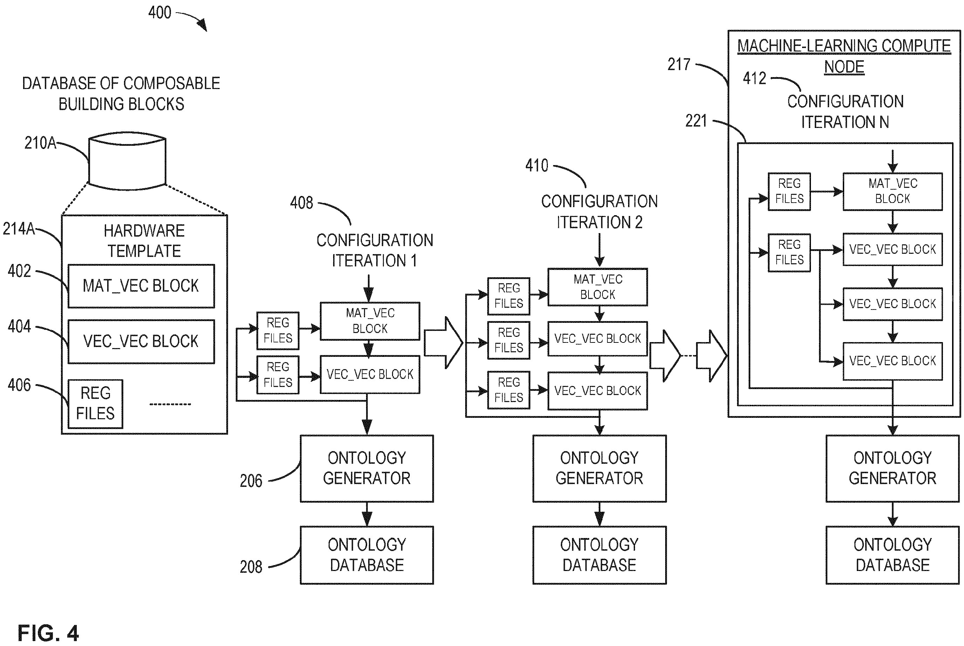

FIG. 4 is an illustration of an example workflow 400 to generate an ML compute node, such as the composable ML compute node 217 of FIG. 2. The workflow 400 includes a first composable building block database 210A of the composable building block databases 210 of FIG. 2, a first hardware template 214A of the hardware templates 214 of FIG. 2, the ontology generator 206 of FIG. 2, the ontology database 208 of FIG. 2, the ML compute node 217 of FIG. 2, and the hardware 221 of FIG. 2.

The first hardware template 214A of the illustrated example includes a first example block 402, a second example block 404, and example register files 406. In this example, the first block 402 is a matrix-vector block (identified by MAT VEC BLOCK). For example, the first block 402 can be a hardware block or portion of hardware, such as the GPU 122 of FIG. 1 (or the CPU 118, the AI processor 126, the FPGA 130, etc., of FIG. 1), that can execute a matrix-vector computational operation. Additionally and/or alternatively, the first block 402 can be a software block, kernel, etc., which can include a portion or snippet of machine readable instructions. In some such examples, the first block 402 can be implemented by code that, when executed by hardware or processor circuitry, can execute a matrix-vector calculation.

In this example, the second block 402 is a vector-vector block (identified by VEC_VEC BLOCK). For example, the second block 404 can be a hardware block or portion of hardware, such as the GPU 122 of FIG. 1 (or the CPU 118, the AI processor 126, the FPGA 130, etc., of FIG. 1), that can execute a vector-vector computational operation. Additionally and/or alternatively, the second block 404 can be a software block, kernel, etc., which can include a portion or snippet of machine readable instructions. In some such examples, the second block 404 can be implemented by code that, when executed by hardware or processor circuitry, can execute a vector-vector calculation.

In this example, the register files 406 can include one or more register files that each can be implemented by an array, a bank, etc., of processor registers. For example, the register files 406 can store states of processor threads (e.g., CPU threads, GPU threads, etc.) that support execution of workloads.

In the illustrated example of FIG. 4, the workflow 400 begins when the ML system configurator 102 of FIGS. 1 and/or 2 generate a first example configuration 408 (identified by CONFIGURATION ITERATION 1) based on the first hardware template 214A, and/or, more generally, the first composable building block database 210A. The first configuration 408 of the illustrated example includes the first block 402, the second block 404, and two register files of the register files 406. In response to generating the first configuration 408, the ML system configurator 102 can evaluate the first configuration 408 based on an execution of the workload(s) 216 of FIG. 2 utilizing the first configuration 408. The ontology generator 206 can update the ontology database 208 based on the first configuration 408, evaluation parameter(s) associated with the first configuration 408, etc., and/or any combination(s) thereof.

In the illustrated example of FIG. 4, the workflow 400 includes the ML system configurator 102 generating a second example configuration 410 (identified by CONFIGURATION ITERATION 2) based on the first hardware template 214A, and/or, more generally, the first composable building block database 210A. In the illustrated example, the second configuration 410 is an iteration, an update, etc., of the first configuration 408. In some examples, the iteration of the first configuration 408 can be effectuated based on evaluation parameter(s) associated with the first configuration 408 (e.g., effectuated by a motivation to increase evaluation parameter values such as accuracy, latency, throughput, etc.). The second configuration 410 of the illustrated example includes the first block 402, two instances of the second block 404, and three register files of the register files 406. In response to generating the second configuration 410, the ML system configurator 102 can evaluate the second configuration 410 based on an execution of the workload(s) 216 with the second configuration 410. The ontology generator 206 can update the ontology database 208 based on the second configuration 410, evaluation parameter(s) associated with the second configuration 410, etc., and/or any combination(s) thereof.

Advantageously, the ML system configurator 102 can simultaneously evolve multiple sets of relevant composable building blocks, each covering a different architecture class and design style. For example, the workflow 400 can be execute for different hardware simultaneously (e.g., substantially simultaneously). In some such examples, the workflow 400 can be executed for a GPU, a CPU, an AI processor, etc., at substantially the same time. Advantageously, simultaneously evolving multiple sets of relevant composable building blocks for different hardware, can result in the identification of hardware that satisfies requirements for a given workload. For example, the ML system configurator 102 can determine that an AI processor architecture based on the systolic array design style can be suitable for compute-intensive AI models, but not suitable for memory-bound and less compute-intensive workloads. Therefore, by simultaneously evolving hardware architectures with different design styles allows the ML system configurator 102 to evolve flexibly to achieve the best accuracy and hardware efficiency combination during the co-design process, which may be implemented entirely and/or partially by the workflow 400. Similarly, the workflow 400 can be executed in the software search space 218 of FIG. 2 by simultaneously evolving multiple sets of relevant composable building blocks for different software. By way of example in the neural network software search, there are multiple classes of networks with their own beneficial properties (e.g., RNNs, CNNs, Transfomers, etc.) and its own composable building block(s) (e.g., matrix x vector for RNNs, convolutions for CNNs, etc.).

During the workflow 400, the ML system configurator 102 can generate and/or otherwise identify the ML compute node 217 based on multiple configuration iterations (e.g., the first configuration 408, the second configuration 410, etc.). In this example, the ML system configurator 102 can generate the ML compute node 217 based on a third example configuration 412 (identified by CONFIGURATION ITERATION N). The third configuration 412 includes the first block 402, three instances of the third block 404, and two register files of the register files 406. The ontology generator 206 can update the ontology database 208 based on the third configuration 412, evaluation parameter(s) associated with the third configuration 412, etc., and/or any combination(s) thereof.

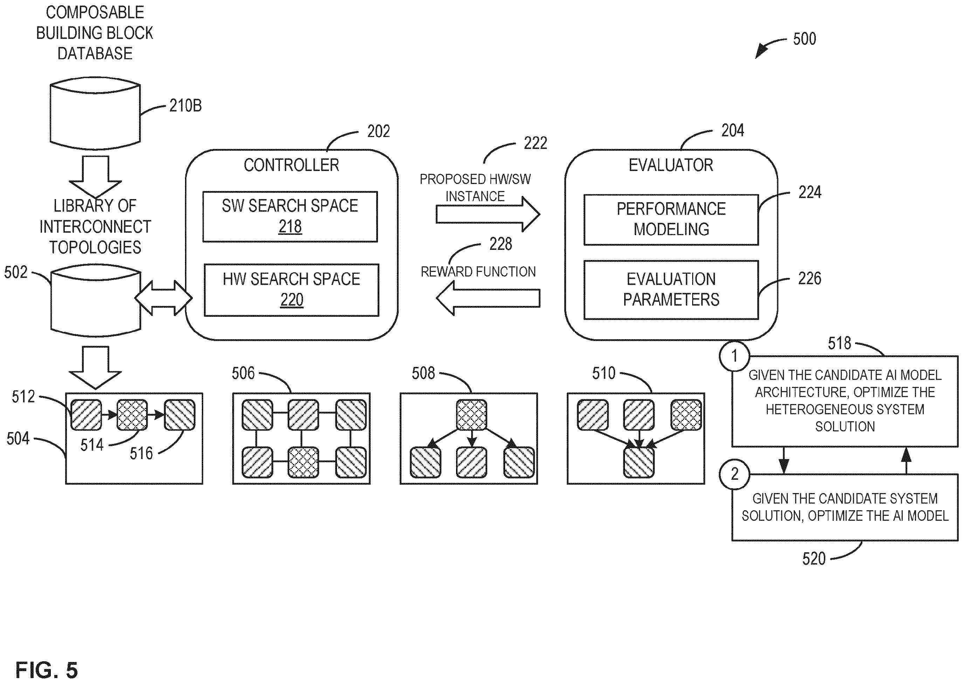

FIG. 5 is an illustration of another example workflow 500 to identify a composable machine learning compute node, such as the ML compute node 217 of FIG. 2. The workflow 500 of the illustrated example includes a second composable building block database 210B of the composable building block databases 210 of FIG. 2, the controller 202 of FIG. 2, the evaluator 204 of FIG. 2, the software search space 218 of FIG. 2, the hardware search space 220 of FIG. 2, the proposed HW/SW instance 222 of FIG. 2, the performance modeling 224 of FIG. 2, the evaluation parameters 226 of FIG. 2, the reward function 228 of FIG. 2, and an example library of interconnect topologies 502.

In the illustrated example, the second composable building block database 210B includes and/or otherwise implements the library of interconnect topologies 502. In some examples, the library of interconnect topologies 502 can be implemented by the interconnect topologies 376 of FIG. 3. In the illustrated example, the library of interconnect topologies 502 depict example topologies of different example nodes 504, 506, 508, 510 including a first example node 504, a second example node 506, a third example node 508, and a fourth example node 510. The nodes 504, 506, 508, 510 of the illustrated example are heterogeneous compute nodes, which may be implemented by one or more portions from different types of hardware. For example, the first node 504 includes a first example hardware kernel 512, a second example hardware kernel 514, and a third example hardware kernel 516. In some such examples, the first hardware kernel 512 can be a hardware kernel of a GPU, the second hardware kernel 514 can be a hardware kernel of an AI processor, and the third hardware kernel 516 can be a hardware kernel of a CPU.

In the illustrated example, each of the nodes 504, 506, 508, 510 have a different topology (e.g., an interconnection configuration). For example, the first node 504 has a first topology in which each of the kernels 512, 514, 516 are in sequence. The second node 506 has a second topology in which each of the kernels 512, 514, 516 are coupled to two other kernels. The third node 508 has a third topology in which one kernel provides outputs to each of the remaining kernels. The fourth node 510 has a fourth topology in which all but one kernel provide their respective outputs to another kernel. Alternatively, any other topology may be included in the library of interconnect topologies 502.

The workflow 500 can generally implement a first example operation 518 and a second example operation 520. For example, the ML system configurator 102 can execute the first operation 518 by optimizing and/or otherwise improving a heterogeneous system solution (e.g., an example implementation of the ML compute node 217) given a candidate AI model architecture (e.g., the software 219 of FIG. 2, portion(s) of the proposed HW/SW instance 222 of FIG. 2, etc.). In some such examples, the ML system configurator 102 can iteratively evolve the hardware portion of the proposed HW/SW instance 222 by iteratively evaluating one(s) of the nodes 504, 506, 508, 510 and their respective topologies to determine which one(s) of the nodes 504, 506, 508, 510 achieves improved and/or otherwise optimal values of evaluation parameters of interest.

In some examples, the ML system configurator 102 can execute the second operation 520 by optimizing and/or otherwise improving the AI model given the candidate system solution. For example, the ML system configurator 102 can iteratively evolve the software portion of the proposed HW/SW instance 222 by iteratively evaluating different AI/ML models, different AI/ML model topologies, etc., in response to a change in the hardware portion of the proposed HW/SW instance 222. In some examples, the first operation 518 and the second operation 520 can be iteratively executed to identify (i) the best and/or otherwise optimal target platform (e.g., hardware and/or software platform) of different compute kernels and/or (ii) the best and/or otherwise optimal interconnect topology between different compute nodes.

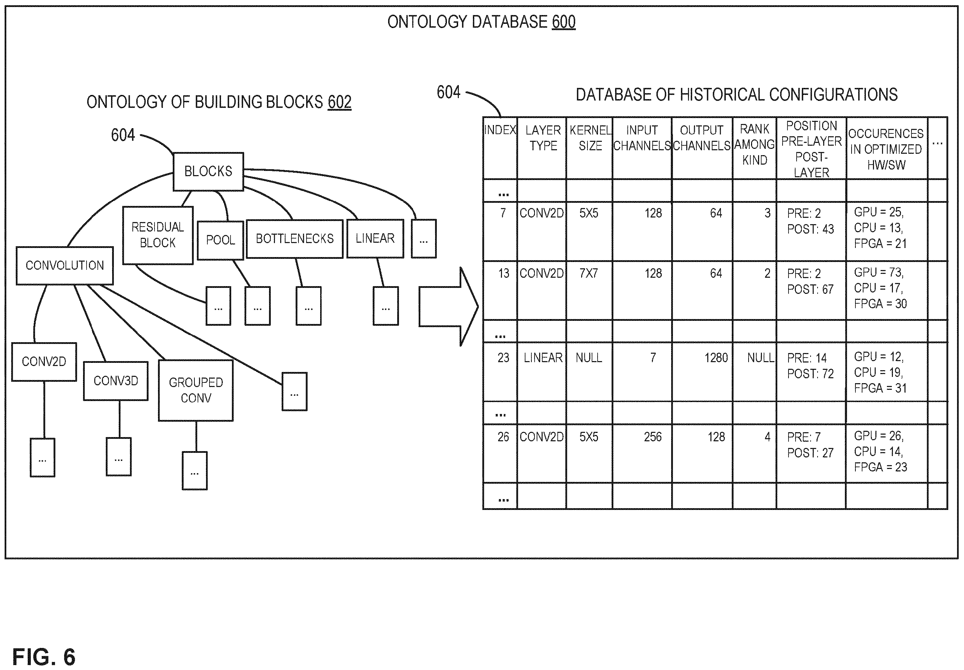

FIG. 6 is an illustration of an example implementation of an example ontology database 600. In some examples, the ontology database 600 can implement the ontology database 208 of FIG. 2, the historical configurations 378 of FIG. 3, and/or the datastore 370 of FIG. 3.

The ontology database 600 of the illustrated example includes an example ontology of building blocks 602. The ontology of building blocks 602 of the illustrated example is implemented by a graph (e.g., an ontology graph). Additionally and/or alternatively, the ontology of building blocks 602 may be implemented by any other data representation such as a table, a map, a grid, a packet, a datagram, a frame, a file, a document, a report, a list or in any other form. The ontology of building blocks 602 includes relationships of example software blocks 604 with one(s) of each other. For example, the software blocks 604 can correspond to portion(s) of an AI/ML model. In the illustrated example, the software blocks 604 include convolution blocks, residual blocks, pool blocks, bottleneck blocks, linear blocks, etc. In the illustrated example, the convolution blocks include two-dimensional convolution (identified by CONV2D), three-dimensional convolution (CONV3D), grouped convolution, etc. For example, different layers of the ontology of building blocks 602 can provide increased granularity of different types and subtypes of AI/ML components.

The ontology database 600 of the illustrated example includes an example database of historical configurations 604. The database 604 of the illustrated example is implemented by a table (e.g., a historical configuration table). Additionally and/or alternatively, the database 604 may be implemented by any other data representation such as a graph, a map, a grid, a packet, a datagram, a frame, a file, a document, a report, a list or in any other form. The database 604 of the illustrated example includes columns for indices, layer types, kernel sizes, input channels, output channels, rank among kind, positions of pre- and post-layers, occurrences in optimized SW/HW, etc. In the illustrated example, a first one of the indices (identified by INDEX 7) corresponds to a layer of an AI/ML model, which in this example is a layer at a particular position in a neural network that may implement two-dimensional convolution. In the illustrated example, INDEX 7 corresponds to two-dimensional convolution with a kernel size of 5x5, 128 input channels, 64 output channels, and a rank of third among two-dimensional convolution layers. In the illustrated example, the two-dimensional convolution layer identified by INDEX 7 typically has a pre-layer corresponding to the layer identified at INDEX 2 in the table and a post-layer corresponding to the layer identified at INDEX 43 in the table. For example, an AI/ML model can have a first layer (e.g., a layer identified by INDEX 2), a second layer (e.g., a layer identified by INDEX 7), and a third layer (e.g., a layer identified by INDEX 43). In some such examples, output(s) of the layer identified by INDEX 2 is/are provided to input(s) of the layer identified by INDEX 7. In some such examples, output(s) of the layer identified by INDEX 7 is/are provided to input(s) of the layer identified by INDEX 43.

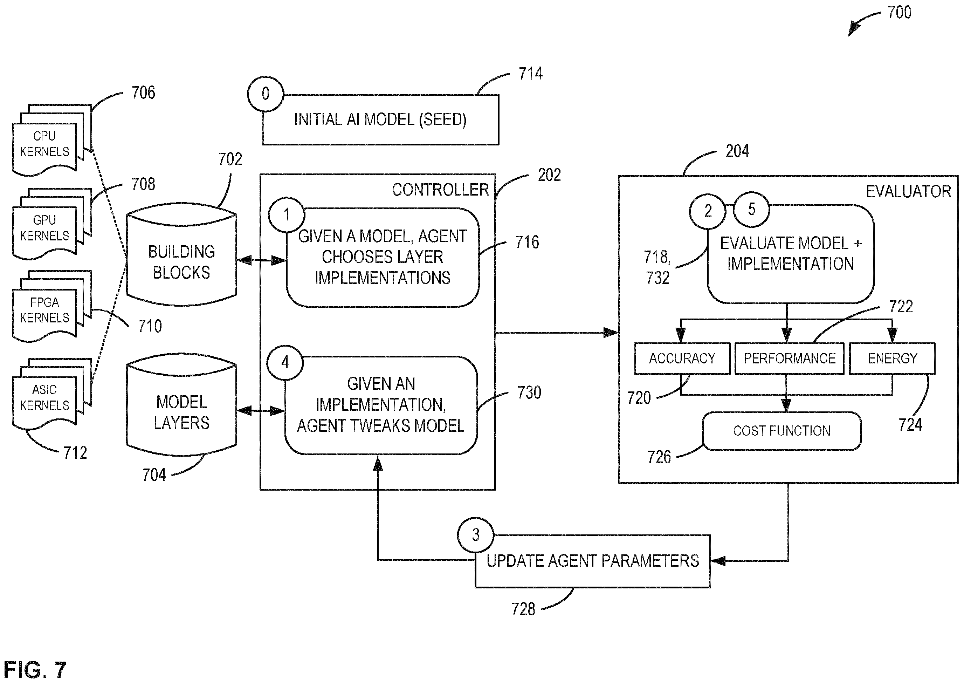

FIG. 7 is an illustration of an example workflow 700 to identify a composable ML compute node, such as the ML compute node 217 of FIG. 2. The workflow 700 includes the controller 202 and the evaluator 204 of FIG. 2. The workflow 700 includes example building blocks 702 and example model layers 704. In some examples, the building blocks 702 can be implemented by the software templates 212, the hardware templates 214, and/or, more generally, the composable building block databases 210 of FIG. 2. In the illustrated example, the building blocks 702 include example CPU kernels 706, example GPU kernels 708, example FPGA kernels 710, and example ASIC kernels 712. In some examples, one(s) of the kernels 706, 708, 710, 712 can be implemented by one(s) of the hardware templates 214 of FIG. 2. For example, the CPU kernels 706 can be implemented by HW TEMPLATE N of FIG. 2, the GPU kernels 708 can be implemented by HW TEMPLATE 2 of FIG. 2, the FPGA kernels 710 can be implemented by HW TEMPLATE 1 of FIG. 1, etc.

In some examples, the model layers 704 can be implemented by the proposed HW/SW instance 222 of FIG. 2 and/or the software 219 of FIG. 2. For example, the model layers 704 can be implemented by a database including historical implementations of ML compute nodes, the instant or current implementation of an ML compute node under evaluation, etc.

During the workflow 700, at an initial example operation 714, the controller 202 receives an initial AI model, which may be referred to as a seed AI model. For example, the initial AI model can be a specific neural network that is known to be efficient for a workload of interest, such as image processing. Additionally and/or alternatively, the initial operation 714 may include a function input, a request, etc., indicative of a desired AI/ML operation (e.g., a desire to do image processing without specifying the initial AI model). In some such examples, the controller 202 can identify the initial AI model based on the function input, the request, etc.

At a first example operation 716, the controller 202 can choose layer implementations given the initial AI model. For example, the controller 202 can map the initial AI model to one(s) of the kernels 706, 708, 710, 712 of the building blocks 702. In some such examples, the controller 202 can identify the GPU kernels 708 based on a determination that the GPU kernels 708 are efficient to execute the initial AI model. For example, the controller 202 can identify implementation(s) of layer(s) of the initial AI model in which the implementation(s) can correspond to hardware, such as one or more of the GPU kernels 708.

During a second example operation 718, the controller 202 can provide the initial AI model and the layer implementations to the evaluator 204. For example, the evaluator 204 can evaluate the model and the layer implementations based on emulation(s), simulation(s), etc., of the model and the layer implementations when the model and the layer implementations are to execute a desired or intended workload. The evaluator 204 can evaluate the model and the layer implementations to generate an example accuracy parameter 720, an example performance parameter 722, an example energy parameter 724, and/or any other type of parameter such as latency, cost (e.g., computational cost, monetary cost, production or manufacturing cost, cost to purchase energy to power hardware running the model, etc.), etc. For example, the accuracy parameter 720 can be an accuracy of the model and the layer implementations. In some examples, the performance parameter 722 can be an efficiency, throughput, etc., of the model and the layer implementations. In some examples, the energy parameter 724 can be a power consumption by the layer implementations when executing the model. In some examples, the energy parameter 724 can be a thermal dissipation of hardware configured using the layer implementations when executing the model. In the illustrated example, the parameters 720, 722, 724 are provided as inputs to an example cost function 726. In some examples, the cost function 726 can be implemented by the reward function 228 of FIG. 2. For example, the cost function 726 can determine a difference between values of the parameters 720, 722, 724 and expected or predicted values of the parameters 720, 722, 724.

During a third example operation 728, the outputs of the cost function 726 can cause an update of agent parameters (e.g., agent parameters in a reinforcement learning AI/ML model) handled and/or otherwise maintained by the controller 202. For example, the controller 202 can determine whether to modify a model to prioritize one parameter (such as accuracy) over another parameter (such as thermal dissipation, energy consumption, etc.).

During a fourth example operation 730, the controller 202 can tweak the model and/or the layer implementations based on the outputs from the cost function 726. For example, the controller 202 can replace the initial AI model with a different type of AI/ML model, change a configuration of the initial AI model, etc. In some examples, the controller 202 can replace the GPU kernels 708 with different kernels (such as the FPGA kernels 710, etc.), change a configuration (e.g., a register file, a topology, etc.) of the GPU kernels 708, etc.

During a fifth example operation 732, the controller 202 provides another iteration of the model and the layer implementations to the evaluator 204 for evaluation. Advantageously, the workflow 700 of FIG. 7 can be executed (e.g., iteratively executed) to identify a model and corresponding layer implementations to execute a workload with improved accuracy, performance, energy consumption, thermal dissipation, cost, etc.

Flowcharts representative of example hardware logic circuitry, machine readable instructions, hardware implemented state machines, and/or any combination thereof for implementing the ML system configurator 102 of FIGS. 1 and/or 2 and/or the ML system configuration circuitry 300 of FIG. 3 are shown in FIGS. 8-13. The machine readable instructions may be one or more executable programs or portion(s) of an executable program for execution by processor circuitry, such as the processor circuitry 1412 shown in the example processor platform 1400 discussed below in connection with FIG. 14 and/or the example processor circuitry discussed below in connection with FIGS. 15 and/or 16. The program may be embodied in software stored on one or more non-transitory computer readable storage media such as a compact disk (CD), a floppy disk, a hard disk drive (HDD), a solid-state drive (SSD), a digital versatile disk (DVD), a Blu-ray disk, a volatile memory (e.g., Random Access Memory (RAM) of any type, etc.), or a non-volatile memory (e.g., electrically erasable programmable read-only memory (EEPROM), FLASH memory, an HDD, an SSD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN)) gateway that may facilitate communication between a server and an endpoint client hardware device). Similarly, the non-transitory computer readable storage media may include one or more mediums located in one or more hardware devices. Further, although the example program is described with reference to the flowcharts illustrated in FIGS. 8-13, many other methods of implementing the example ML system configurator 102 of FIGS. 1 and/or 2 and/or the example ML system configuration circuitry 300 of FIG. 3 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 8-13 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium are expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 8 is a flowchart representative of example machine readable instructions and/or example operations 800 that may be executed and/or instantiated by processor circuitry to execute a workload with a composable ML compute node. The example machine readable instructions and/or the example operations 800 of FIG. 8 begin at block 802, at which the ML system configuration circuitry 300 receives a request to execute a machine-learning (ML) workload. For example, the interface circuitry 310 (FIG. 3) can receive a request to identify a combination of hardware and/or software to execute the workload(s) 216 of FIG. 2. In some such examples, the combination of the hardware and/or the software can be implemented by the software 219, the hardware 221, and/or, more generally, the ML compute node 217 of FIG. 2.

At block 804, the ML system configuration circuitry 300 generates a first configuration of one or more ML models based on the ML workload. For example, the ML software configuration circuitry 320 (FIG. 3) can identify an AI/ML model such as a CNN from the software search space 218. In some such examples, the ML software configuration circuitry 320 can identify a configuration of the CNN based on one of the software templates 212 of FIG. 2, the software templates 372 of FIG. 3, etc., that corresponds to the CNN. An example process that may be executed to implement block 804 is described below in connection with FIG. 9.

At block 806, the ML system configuration circuitry 300 generates a second configuration of hardware based on the ML workload. For example, the ML hardware configuration circuitry 330 (FIG. 3) can identify hardware such as a GPU from the hardware search space 220. In some such examples, the ML hardware configuration circuitry 330 can identify a configuration of the GPU based on one of the hardware templates 214 of FIG. 2, the hardware templates 374 of FIG. 3, etc., that corresponds to the GPU. An example process that may be executed to implement block 804 is described below in connection with FIG. 10.

At block 808, the ML system configuration circuitry 300 generates an evaluation parameter based on an execution of the workload based on the first configuration and the second configuration. For example, the configuration evaluation circuitry 340 (FIG. 3) can execute performance modeling (e.g., emulation(s), simulation(s), debugging, etc.) associated with the GPU executing the CNN. In some such examples, the configuration evaluation circuitry 340 can generate the evaluation parameters 226, which can correspond to a simulation, an emulation, etc., of the GPU executing an AI/ML workload with the CNN

At block 810, the ML system configuration circuitry 300 determines whether the evaluation parameter satisfies a threshold. For example, the configuration evaluation circuitry 340 can determine whether an evaluation parameter, such as an accuracy parameter, has a value that satisfies an evaluation parameter threshold, such as an accuracy threshold (e.g., an accuracy parameter threshold). In some such examples, the configuration evaluation circuitry 340 can determine that the accuracy parameter has a value of 95%, which satisfies the accuracy threshold of 90% because the value of 95% is greater than 90%.

If, at block 810, the ML system configuration circuitry 300 determines that the evaluation parameter does not satisfy a threshold, then, at block 812, the ML system configuration circuitry 300 updates an ontology database based on the evaluation parameter. For example, the ontology generation circuitry 350 (FIG. 3) can update the ontology database 208 of FIG. 2 based on the evaluation parameters 226, the proposed HW/SW instance 222 that are associated with the evaluation parameters 226, etc., and/or any combination(s) thereof.

At block 814, the ML system configuration circuitry 300 adjusts the first configuration based on the evaluation parameter. For example, the ML software configuration circuitry 320 can replace the CNN with a different AI/ML model, add another AI/ML model, change a configuration of the CNN, etc., and/or any combination(s) thereof. An example process that may be executed to implement block 814 is described below in connection with FIG. 11.

At block 816, the ML system configuration circuitry 300 adjusts the second configuration based on the evaluation parameter. For example, the ML hardware configuration circuitry 330 can replace the GPU with different hardware, add additional hardware, change a configuration of the GPU, etc., and/or any combination(s) thereof. An example process that may be executed to implement block 816 is described below in connection with FIG. 12. In response to adjusting the second configuration based on the evaluation parameter at block 816, control returns to block 808 to generate an evaluation parameter based on an execution of the workload based on the first configuration (e.g., an updated or adjusted version of the first configuration) and the second configuration (e.g., an updated or adjusted version of the second configuration).

If, at block 810, the ML system configuration circuitry 300 determines that the evaluation parameter satisfies a threshold, control proceeds to block 818 to execute the one or more ML models based on the ML models based on the first configuration on the hardware in the second configuration. For example, the workload execution circuitry 360 (FIG. 3) can compile, compose, generate, identify, and/or otherwise instantiate the ML compute node 217 of FIG. 2. In some such examples, the software 219 of the ML compute node 217 can be implemented by one or more AI/ML models based on the first configuration. In some examples, the hardware 221 of the ML compute node 217 can be implemented by one or more types and/or instances of hardware based on the second configuration. In some examples, the ML compute node 217 can be deployed and/or otherwise made available to execute the workload(s) 216. In response to executing the one or more ML models based on the first configuration on the hardware in the second configuration at block 818, the example machine readable instructions and/or the example operations 800 of FIG. 8 conclude.

FIG. 9 is a flowchart representative of example machine readable instructions and/or example operations 900 that may be executed and/or instantiated by processor circuitry to generate a first configuration of one or more machine-learning models based on a machine-learning workload. The example machine readable instructions and/or the example operations 900 of FIG. 9 can be executed and/or instantiated by processor circuitry to implement block 804 of the example machine readable instructions and/or the example operations 800 of FIG. 8. The example machine readable instructions and/or the example operations 900 of FIG. 9 begin at block 902, at which the ML system configuration circuitry 300 of FIG. 3 queries a configuration database with the ML workload using an application programming interface. For example, the ML software configuration circuitry 320 (FIG. 3) can query one(s) of the composable building block databases 210 of FIG. 2, the software templates 372 of FIG. 3, and/or the interconnect topologies 376 of FIG. 3 via one or more APIs.

At block 904, the ML system configuration circuitry 300 identifies an ML model based on historical configurations. For example, the ontology generation circuitry 360 (FIG. 3) can identify an ML model, such as an NN, that was utilized in previous AutoML searches. In some such examples, the ontology generation circuitry 360 can identify the ML model based on historical configurations that may be stored in the ontology database 208 of FIG. 2 and/or the historical configurations 378 of FIG. 3.

At block 906, the ML system configuration circuitry 300 determines a number of layers for the ML model. For example, the ML software configuration circuitry 320 can determine that the NN is to have a plurality of layers (e.g., network layers, NN layers, etc.) in which one(s) of the plurality of layers is/are coupled to different one(s) of the plurality of layers in a NN configuration. In some such examples, the ML software configuration circuitry 320 can determine the plurality of layers and/or configuration(s) thereof based on information (e.g., metadata or other data) included in the software templates 212 of FIG. 2, the software templates 372 of FIG. 3, etc.

At block 908, the ML system configuration circuitry 300 determines weights for the layers of the ML model. For example, the ML software configuration circuitry 320 can determine that one(s) of the plurality of layers is/are to have specific weights (e.g., weight values). In some such examples, the ML software configuration circuitry 320 can determine the weights based on information (e.g., metadata or other data) included in the software templates 212, the software templates 372 of FIG. 3, etc.

At block 910, the ML system configuration circuitry 300 determines a type of ML training for the ML model. For example, the ML software configuration circuitry 320 can determine that the NN model is to be trained with reinforcement learning. In some such examples, the ML software configuration circuitry 320 can determine the type of ML training to use to train the NN model based on information (e.g., metadata or other data) included in the software templates 212, the software templates 372 of FIG. 3, etc.

At block 912, the ML system configuration circuitry 300 determines hyperparameters to train the ML model. For example, the ML software configuration circuitry 320 can determine values of one or more hyperparameters that may be utilized to train the NN model. In some such examples, the ML software configuration circuitry 320 can determine the values of the hyperparameters based on information (e.g., metadata or other data) included in the software templates 212, the software templates 372 of FIG. 3, etc.

At block 914, the ML system configuration circuitry 300 determines whether another ML model is identified. For example, the ML software configuration circuitry 320 can determine that another type of AI/ML model, such as a Transformer, is identified to be used in conjunction with the NN. In some such examples, the ML software configuration circuitry 320 can identify a number of AI/ML models and/or types thereof by searching the software search space 218. In some examples, the ML software configuration circuitry 320 can determine that the first NN model identified is a CNN and that another type of NN model such as an ANN, DNN, etc., that can be utilized in conjunction with the CNN

If, at block 914, the ML system configuration circuitry 300 determines that another ML model is identified, control returns to block 906 to determine a number of layers for the additionally identified ML model. If, at block 914, the ML system configuration circuitry 300 determines that another ML model is not identified, then, at block 916, the ML system configuration circuitry 300 determines whether more than one ML model has been identified. For example, the ML software configuration circuitry 320 can determine that only one ML model has been identified (e.g., a CNN) while in other examples, the ML software configuration circuitry 320 can determine that more than one ML model has been identified (e.g., a CNN and a Transformer model).

If, at block 916, the ML system configuration circuitry 300 determines that only one ML model has been identified, then the example machine readable instructions and/or the example operations 900 of FIG. 9 conclude. For example, the machine readable instructions and/or the example operations 900 of FIG. 9 can return to block 806 of the machine readable instructions and/or the example operations 800 of FIG. 8 to generate a second configuration of hardware based on the ML workload.

If, at block 916, the ML system configuration circuitry 300 determines that more than one ML model has been identified, then, at block 918, the ML system configuration circuitry 300 generates a topology based on connection(s) between one(s) of the ML models. For example, the ML software configuration circuitry 320 can analyze the different topologies in the interconnect topologies 376 to identify connection(s) between a first identified AI/ML model (e.g., a CNN) and a second identified AI/ML model (e.g., a Transformer model). In some such examples, the ML software configuration circuitry 320 can couple output(s) of the first identified AI/ML model to input(s) of the second identified AI/ML model based on a topology in the interconnect topologies 376.

In response to generating a topology based on connection(s) between one(s) of the ML models at block 918, the example machine readable instructions and/or the example operations 900 of FIG. 9 conclude. For example, the machine readable instructions and/or the example operations 900 of FIG. 9 can return to block 806 of the machine readable instructions and/or the example operations 800 of FIG. 8 to generate a second configuration of hardware based on the ML workload.

FIG. 10 is a flowchart representative of example machine readable instructions and/or example operations 1000 that may be executed and/or instantiated by processor circuitry to generate a second configuration of hardware based on a machine-learning workload. The example machine readable instructions and/or the example operations 1000 of FIG. 10 can be executed and/or instantiated by processor circuitry to implement block 806 of the example machine readable instructions and/or the example operations 800 of FIG. 8. The example machine readable instructions and/or the example operations 1000 of FIG. 10 begin at block 1002, at which the ML system configuration circuitry 300 of FIG. 3 queries a configuration database with the ML workload using an application programming interface. For example, the ML hardware configuration circuitry 330 (FIG. 3) can query one(s) of the composable building block databases 210 of FIG. 2, the hardware templates 374 of FIG. 3, and/or the interconnect topologies 376 of FIG. 3 via one or more APIs.

At block 1004, the ML system configuration circuitry 300 identifies a type of hardware based on historical configurations. For example, the ontology generation circuitry 360 (FIG. 3) can identify a type of hardware, such as a GPU, that was utilized in previous AutoML searches. In some such examples, the ontology generation circuitry 360 can identify the GPU based on historical configurations that may be stored in the ontology database 208 of FIG. 2 and/or the historical configurations 378 of FIG. 3.

At block 1006, the ML system configuration circuitry 300 determines a first block of the hardware to execute a matrix-matrix workload. For example, the ML hardware configuration circuitry 330 can identify a first kernel of the GPU to execute matrix-matrix computational operation(s). In some such examples, the ML hardware configuration circuitry 330 can identify the first kernel and/or configuration(s) thereof based on information (e.g., metadata or other data) included in the hardware templates 214 of FIG. 2, the hardware templates 374 of FIG. 3, etc.

At block 1008, the ML system configuration circuitry 300 determines a second block of the hardware to execute a vector-vector workload. For example, the ML hardware configuration circuitry 330 can identify a second kernel (e.g., the second block 404 of FIG. 4) of the GPU to execute vector-vector computational operation(s). In some such examples, the ML hardware configuration circuitry 330 can identify the second kernel and/or configuration(s) thereof based on information (e.g., metadata or other data) included in the hardware templates 214 of FIG. 2, the hardware templates 374 of FIG. 3, etc.

At block 1010, the ML system configuration circuitry 300 determines a third block of the hardware to execute a matrix-vector workload. For example, the ML hardware configuration circuitry 330 can identify a third kernel (e.g., the first block 402 of FIG. 4) of the GPU to execute matrix-vector computational operation(s). In some such examples, the ML hardware configuration circuitry 330 can identify the third kernel and/or configuration(s) thereof based on information (e.g., metadata or other data) included in the hardware templates 214 of FIG. 2, the hardware templates 374 of FIG. 3, etc.

At block 1012, the ML system configuration circuitry 300 identifies register file(s) to store states of respective ones of the first block, the second block, and/or the third block. For example, the ML hardware configuration circuitry 330 can generate and/or otherwise identify a first register file (e.g., one of the register files 406 of FIG. 4) in which state(s) of hardware thread(s) corresponding to the first kernel can be stored. In some such examples, the ML hardware configuration circuitry 330 can generate, identify, and/or otherwise instantiate a second register file corresponding to the second kernel and/or a third register file corresponding to the third kernel.

At block 1014, the ML system configuration circuitry 300 determines whether another type of hardware is identified. For example, the ML hardware configuration circuitry 330 can determine that another type of hardware, such as a CPU, an AI processor, an FPGA, etc., is identified to be used in conjunction with the GPU. In some such examples, the ML hardware configuration circuitry 330 can identify a number of instances of hardware (or portion(s) thereof) and/or types thereof by searching the hardware search space 220. In some examples, the ML hardware configuration circuitry 330 can determine that another instance of the GPU (or portion(s) thereof) can be utilized in conjunction with the GPU.

If, at block 1014, the ML system configuration circuitry 300 determines that another type of hardware is identified, control returns to block 1006 to identify a first block of the identified hardware. If, at block 1014, the ML system configuration circuitry 300 determines that another type of hardware is not identified, then, at block 1016, the ML system configuration circuitry 300 determines whether more than one type and/or instance of hardware been identified. For example, the ML hardware configuration circuitry 330 can determine that only one type and/or instance of hardware has been identified (e.g., a single GPU kernel, a single GPU, etc.). In some such examples, the ML hardware configuration circuitry 330 can determine that a homogeneous ML compute node has been identified. In some examples, the ML hardware configuration circuitry 330 can determine that more than one instance and/or type of hardware (e.g., more than one GPU, more than one GPU kernel, a GPU and an FPGA, at least one GPU kernel and at least one FPGA kernel, etc.) has been identified. In some such examples, the ML hardware configuration circuitry 330 can determine that a heterogeneous ML compute node has been identified.

If, at block 1016, the ML system configuration circuitry 300 determines that only one type and/or instance of hardware has been identified, then the example machine readable instructions and/or the example operations 1000 of FIG. 10 conclude. For example, the machine readable instructions and/or the example operations 1000 of FIG. 10 can return to block 808 of the machine readable instructions and/or the example operations 800 of FIG. 8 to generate an evaluation parameter based on an execution of the workload based on the first configuration and the second configuration.

If, at block 1016, the ML system configuration circuitry 300 determines that more than one type and/or instance of hardware has been identified, then, at block 1018, the ML system configuration circuitry 300 generates a topology based on connection(s) of the hardware. For example, the ML hardware configuration circuitry 330 can analyze the different topologies in the interconnect topologies 376 to identify connection(s) between a first hardware kernel (e.g., a first GPU kernel) and a second hardware kernel (e.g., a second GPU kernel). In some examples, the ML hardware configuration circuitry 330 can analyze the different topologies in the interconnect topologies 376 to identify connection(s) between a first type of hardware (e.g., a GPU) and a second type of hardware (e.g., an AI processor). In some examples, the ML hardware configuration circuitry 330 can couple output(s) of the first hardware kernel and the second hardware kernel based on a topology included in the interconnect topologies 376. In some examples, the ML hardware configuration circuitry 330 can couple output(s) of the first type of hardware and the second type of hardware based on a topology included in the interconnect topologies 376.

In response to generating a topology based on connection(s) of the hardware at block 1018, the example machine readable instructions and/or the example operations 1000 of FIG. 10 conclude. For example, the machine readable instructions and/or the example operations 1000 of FIG. 10 can return to block 808 of the machine readable instructions and/or the example operations 800 of FIG. 8 to generate an evaluation parameter based on an execution of the workload based on the first configuration and the second configuration.

FIG. 11 is a flowchart representative of example machine readable instructions and/or example operations 1100 that may be executed and/or instantiated by processor circuitry to adjust the first configuration based on the evaluation parameter. The example machine readable instructions and/or the example operations 1100 of FIG. 11 may be executed and/or instantiated by processor circuitry to implement block 814 of the example machine readable instructions and/or the example operations 800 of FIG. 8. The example machine readable instructions and/or the example operations 1100 of FIG. 11 begin at block 1102, at which the ML system configuration circuitry 300 determines whether to replace a first ML model with a different ML model. For example, the ML software configuration circuitry 320 (FIG. 3) can determine that the proposed HW/SW instance 222 of FIG. 2 includes a first AI/ML model, such as a CNN. In some such examples, the ML software configuration circuitry 320 can determine the CNN model is to be replaced with a DNN model.

If, at block 1102, the ML system configuration circuitry 300 determines not to replace the first ML model with a different ML model, control proceeds to block 1108. If, at block 1102, the ML system configuration circuitry 300 determines to replace the first ML model with a different ML model, then, at block 1104, the ML system configuration circuitry 300 identifies a second ML model in a configuration database. For example, the ML software configuration circuitry 320 can identify a DNN in the software templates 212 of the composable building blocks database 210.

At block 1106, the ML system configuration circuitry 300 generates a new configuration based on the replacement of the first ML model with the second ML model. For example, the ML software configuration circuitry 320 can generate a new or updated configuration of software in the proposed HW/SW instance 222 by replacing the CNN with the DNN

At block 1108, the ML system configuration circuitry 300 determines whether to add a second ML model to a configuration. For example, the ML software configuration circuitry 320 can determine to add the DNN to the configuration of the software in conjunction with the CNN and/or a different AI/ML model.

If, at block 1108, the ML system configuration circuitry 300 determines not to add a second ML model to a configuration, the example machine readable instructions and/or the example operations 1100 of FIG. 11 conclude. For example, the machine readable instructions and/or the example operations 1100 of FIG. 11 can return to block 816 of the machine readable instructions and/or the example operations 800 of FIG. 8 to adjust the second configuration based on the evaluation parameter.

If, at block 1108, the ML system configuration circuitry 300 determines to add a second ML model to a configuration, then, at block 1110, the ML system configuration circuitry 300 determines one or more first layers of the first ML model to execute a first portion of a workload. For example, in a configuration that includes a CNN and a DNN, the ML software configuration circuitry 320 can identify and/or otherwise determine one or more first layers of the CNN to execute a first portion of the workload(s) 216.

At block 1112, the ML system configuration circuitry 300 identifies a second ML model in a configuration database. For example, the ML software configuration circuitry 320 can identify the DNN in the software templates 212 of the composable building block databases 210.

At block 1114, the ML system configuration circuitry 300 determines one or more second layers of the second ML model to execute a second portion of the workload. For example, in a configuration that includes a CNN and a DNN, the ML software configuration circuitry 320 can identify and/or otherwise determine one or more second layers of the DNN to execute a second portion of the workload(s) 216.

At block 1116, the ML system configuration circuitry 300 determines a new configuration based on a topology of the one or more first layers and the one or more second layers. For example, the ML software configuration circuitry 320 can determine to couple output(s) of the CNN to input(s) of the DNN (or vice versa) based on a topology included in the interconnect topologies 376.

In response to determining a new configuration based on a topology of the one or more first layers and the one or more second layers at block 1116, the example machine readable instructions and/or the example operations 1100 of FIG. 11 conclude. For example, the machine readable instructions and/or the example operations 1100 of FIG. 11 can return to block 816 of the machine readable instructions and/or the example operations 800 of FIG. 8 to adjust the second configuration based on the evaluation parameter.

FIG. 12 is a flowchart representative of example machine readable instructions and/or example operations 1200 that may be executed and/or instantiated by processor circuitry to adjust the second configuration based on the evaluation parameter. The example machine readable instructions and/or the example operations 1200 of FIG. 12 may be executed and/or instantiated by processor circuitry to implement block 816 of the example machine readable instructions and/or the example operations 800 of FIG. 8. The example machine readable instructions and/or the example operations 1200 of FIG. 12 begin at block 1202, at which the ML system configuration circuitry 300 determines whether to replace first hardware with different hardware. For example, the ML hardware configuration circuitry 330 (FIG. 3) can determine that the proposed HW/SW instance 222 of FIG. 2 includes first hardware, such as a GPU. In some such examples, the ML hardware configuration circuitry 330 can determine the GPU is to be replaced with an FPGA.

If, at block 1202, the ML system configuration circuitry 300 determines not to replace the first hardware with different hardware, control proceeds to block 1208. If, at block 1202, the ML system configuration circuitry 300 determines to replace the first hardware with different hardware, then, at block 1204, the ML system configuration circuitry 300 identifies second hardware in a configuration database. For example, the ML hardware configuration circuitry 330 can identify an FPGA in the hardware templates 214 of the composable building blocks database 210.

At block 1206, the ML system configuration circuitry 300 generates a new configuration based on the replacement of the first hardware with the second hardware. For example, the ML hardware configuration circuitry 330 can generate a new or updated configuration of hardware in the proposed HW/SW instance 222 by replacing the GPU with the FPGA.

At block 1208, the ML system configuration circuitry 300 determines whether to add second hardware to a configuration. For example, the ML hardware configuration circuitry 330 can determine to add the FPGA to the configuration of the hardware in conjunction with the GPU and/or different hardware (such as an AI processor).

If, at block 1208, the ML system configuration circuitry 300 determines not to add second hardware to a configuration, the example machine readable instructions and/or the example operations 1200 of FIG. 12 conclude. For example, the machine readable instructions and/or the example operations 1200 of FIG. 12 can return to block 818 of the machine readable instructions and/or the example operations 800 of FIG. 8 to execute the one or more ML models based on the first configuration on the hardware in the second configuration.

If, at block 1208, the ML system configuration circuitry 300 determines to add second hardware to a configuration, then, at block 1210, the ML system configuration circuitry 300 determines one or more first portions of the first hardware to execute a first portion of a workload. For example, in a configuration that includes a GPU and an FPGA, the ML hardware configuration circuitry 330 can identify and/or otherwise determine one or more first kernels of the GPU to execute a first portion of the workload(s) 216.

At block 1212, the ML system configuration circuitry 300 identifies second hardware in a configuration database. For example, the ML hardware configuration circuitry 330 can identify the FPGA in the hardware templates 214 of the composable building block databases 210.

At block 1214, the ML system configuration circuitry 300 determines one or more second portions of the second hardware to execute a second portion of the workload. For example, in a configuration that includes a GPU and an FPGA, the ML hardware configuration circuitry 330 can identify and/or otherwise determine one or more second kernels of the FPGA to execute a second portion of the workload(s) 216.

At block 1216, the ML system configuration circuitry 300 determines a new configuration based on a topology of the one or more first portions and the one or more second portions. For example, the ML hardware configuration circuitry 330 can determine to couple output(s) of the GPU to input(s) of the FPGA (or output(s) of the FPGA to input(s) of the GPU) based on a topology included in the interconnect topologies 376.

In response to determining a new configuration based on a topology of the one or more first portions and the one or more second portions at block 1216, the example machine readable instructions and/or the example operations 1200 of FIG. 12 conclude. For example, the machine readable instructions and/or the example operations 1200 of FIG. 12 can return to block 818 of the machine readable instructions and/or the example operations 800 of FIG. 8 to execute the one or more ML models based on the first configuration on the hardware in the second configuration.

FIG. 13 is a flowchart representative of example machine readable instructions and/or example operations 1300 that may be executed and/or instantiated by processor circuitry to deploy a compute node to execute a machine-learning workload. The example machine readable instructions and/or the example operations 1300 of FIG. 13 begin at block 1302, at which the ML system configuration circuitry 300 receives a request for a machine-learning (ML) model and corresponding hardware to execute an ML workload. For example, the interface circuitry 310 (FIG. 3) can receive a request to identify a combination of hardware and/or software to execute the workload(s) 216 of FIG. 2. In some such examples, the combination of the hardware and/or the software can be implemented by the software 219, the hardware 221, and/or, more generally, the ML compute node 217 of FIG. 2.

At block 1304, the ML system configuration circuitry 300 generates a software search space and a hardware search space based on at least one of the request or historical configurations. For example, the ML software configuration circuitry 320 can generate the software search space 218 of FIG. 2 based on the workload(s) 216, historical configurations of ML compute nodes that may be stored in the ontology database 208 of FIG. 2, the historical configurations 378 of FIG. 3, etc., and/or any combination(s) thereof. In some examples, the ML hardware configuration circuitry 330 can generate the hardware search space 220 of FIG. 2 based on the workload(s) 216, historical configurations of ML compute nodes that may be stored in the ontology database 208 of FIG. 2, the historical configurations 378 of FIG. 3, etc., and/or any combination(s) thereof.

At block 1306, the ML system configuration circuitry 300 selects a configuration of ML model(s) and corresponding hardware for a compute node based on at least one of the software search space or the hardware search space. For example, the ML software configuration circuitry 320 and/or the ML hardware configuration circuitry 330 can generate the proposed HW/SW instance 222 of FIG. 2 based on one or more AI/ML models from the software search space 218 and hardware from the hardware search space 220.

At block 1308, the ML system configuration circuitry 300 selects a topology for a configuration of the ML model(s) and the corresponding hardware for the compute node. For example, the ML software configuration circuitry 320 can couple together one or more ML models of the proposed HW/SW instance 222. In some examples, the ML hardware configuration circuitry 330 can couple together hardware of the proposed HW/SW instance 222.

At block 1310, the ML system configuration circuitry 300 outputs evaluation parameters associated with the configuration. For example, the configuration evaluation circuitry 340 (FIG. 3) can determine the evaluation parameters 226 based on the performance modeling 224 of the proposed HW/SW instance 222.

At block 1312, the ML system configuration circuitry 300 determines whether one(s) of the evaluation parameters satisfy respective thresholds. For example, the configuration evaluation circuitry 340 can determine whether a first value of an accuracy parameter satisfies an accuracy threshold, a second value of a latency parameter satisfies a latency parameter, etc., and/or any combination(s) thereof.

If, at block 1312, the ML system configuration circuitry 300 determines that one(s) of the evaluation parameters do not satisfy respective threshold(s), control returns to block 1306, otherwise, at block 1314, the ML system configuration circuitry 300 deploys the compute node to execute the ML workload. For example, the workload execution circuitry 360 (FIG. 3) can deploy the ML compute node 217 to execute the workload(s) 216. In some such examples, the workload execution circuitry 360 can compile and/or otherwise provide the ML compute node 217 as an executable construct that, when executed and/or instantiated, can execute the workload(s) 216. In response to deploying the compute node to execute the ML workload at block 1314, the example machine readable instructions and/or the example operations 1300 of FIG. 13 conclude.

FIG. 14 is a block diagram of an example processor platform 1400 structured to execute and/or instantiate the machine readable instructions and/or the operations of FIGS. 8-13 to implement the ML system configurator 102 of FIGS. 1 and/or 2 and/or the ML system configuration circuitry 300 of FIG. 3. The processor platform 1400 can be, for example, a server, a personal computer, a workstation, a self-learning machine (e.g., a neural network), a mobile device (e.g., a cell phone, a smart phone, a tablet such as an iPad^{™}), a headset (e.g., an augmented reality (AR) headset, a virtual reality (VR) headset, etc.) or other wearable device, or any other type of computing device.

The processor platform 1400 of the illustrated example includes processor circuitry 1412. The processor circuitry 1412 of the illustrated example is hardware. For example, the processor circuitry 1412 can be implemented by one or more integrated circuits, logic circuits, FPGAs, microprocessors, CPUs, GPUs, DSPs, and/or microcontrollers from any desired family or manufacturer. The processor circuitry 1412 may be implemented by one or more semiconductor based (e.g., silicon based) devices. In this example, the processor circuitry 1412 implements the ML software configuration circuitry 320 (identified by ML SW CONFIG CIRCUITRY), the ML hardware configuration circuitry 330 (identified by ML HW CONFIG CIRCUITRY), the configuration evaluation circuitry 340 (identified by CONFIG EVAL CIRCUITRY), the ontology generation circuitry 350 (identified by ONTOL GEN CIRCUITRY), and the workload execution circuitry 360 (identified by WORKLOAD EXEC CIRCUITRY) of FIG. 3.

The processor circuitry 1412 of the illustrated example includes a local memory 1413 (e.g., a cache, registers, etc.). The processor circuitry 1412 of the illustrated example is in communication with a main memory including a volatile memory 1414 and a non-volatile memory 1416 by a bus 1418. In some examples, the bus 1418 implements the bus 380 of FIG. 3. The volatile memory 1414 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1416 may be implemented by flash memory and/or any other desired type of memory device. Access to the main memory 1414, 1416 of the illustrated example is controlled by a memory controller 1417.

The processor platform 1400 of the illustrated example also includes interface circuitry 1420. In this example, the interface circuitry 1420 implements the interface circuitry 310 of FIG. 3. The interface circuitry 1420 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1422 are connected to the interface circuitry 1420. The input device(s) 1422 permit(s) a user to enter data and/or commands into the processor circuitry 1412. The input device(s) 1422 can be implemented by, for example, an audio sensor, a microphone, a camera (still or video), a keyboard, a button, a mouse, a touchscreen, a track-pad, a trackball, an isopoint device, and/or a voice recognition system.

One or more output devices 1424 are also connected to the interface circuitry 1420 of the illustrated example. The output device(s) 1424 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1420 of the illustrated example, thus, typically includes a graphics driver card, a graphics driver chip, and/or graphics processor circuitry such as a GPU.

The interface circuitry 1420 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1426. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 1400 of the illustrated example also includes one or more mass storage devices 1428 to store software and/or data. In this example, the one or more mass storage devices 1428 implement the datastore 370, the software templates 372 (identified by SW TEMP), the hardware templates 374 (identified by HW TEMP), the interconnect topologies 376 (identified by INTER TOPOLOGIES), and the historical configurations 378 (identified by HIST CONFIGS). Examples of such mass storage devices 1428 include magnetic storage devices, optical storage devices, floppy disk drives, HDDs, CDs, Blu-ray disk drives, redundant array of independent disks (RAID) systems, solid state storage devices such as flash memory devices and/or SSDs, and DVD drives.

The machine executable instructions 1432, which may be implemented by the machine readable instructions of FIGS. 8-13, may be stored in the mass storage device 1428, in the volatile memory 1414, in the non-volatile memory 1416, and/or on a removable non-transitory computer readable storage medium such as a CD or DVD

The processor platform 1400 of the illustrated example of FIG. 14 includes example acceleration circuitry 1434, which includes an example GPU 1440, an example vision processing unit (VPU) 1442, and an example neural network processor 1444. Additionally and/or alternatively, the acceleration circuitry 1434 may include any other type of hardware such as a CPU, an FPGA, an ASIC, etc. In this example, the GPU 1440, the VPU 1442, and the neural network processor 1444 are in communication with different hardware of the processor platform 1400, such as the volatile memory 1414, the non-volatile memory 1416, etc., via the bus 1418. In this example, the neural network processor 1444 may be implemented by one or more integrated circuits, logic circuits, microprocessors, GPUs, DSPs, or controllers from any desired family or manufacturer that can be used to execute an AI model, such as a neural network. In some examples, one or more of the ML software configuration circuitry 320, the ML hardware configuration circuitry 330, the configuration evaluation circuitry 340, the ontology generation circuitry 350, and/or the workload execution circuitry 360 can be implemented in or with at least one of the GPU 1440, the VPU 1442, or the neural network processor 1444 instead of or in addition to the processor 1412.

FIG. 15 is a block diagram of an example implementation of the processor circuitry 1412 of FIG. 14. In this example, the processor circuitry 1412 of FIG. 14 is implemented by a general purpose microprocessor 1500. The general purpose microprocessor circuitry 1500 executes some or all of the machine readable instructions of the flowcharts of FIGS. 8-13 to effectively instantiate the ML system configuration circuitry 300 of FIG. 3 as logic circuits to perform the operations corresponding to those machine readable instructions. In some such examples, the ML system configuration circuitry 300 of FIG. 3 is instantiated by the hardware circuits of the microprocessor 1500 in combination with the instructions. For example, the microprocessor 1500 may implement multi-core hardware circuitry such as a CPU, a DSP, a GPU, an XPU, etc. Although it may include any number of example cores 1502 (e.g., 1 core), the microprocessor 1500 of this example is a multi-core semiconductor device including N cores. The cores 1502 of the microprocessor 1500 may operate independently or may cooperate to execute machine readable instructions. For example, machine code corresponding to a firmware program, an embedded software program, or a software program may be executed by one of the cores 1502 or may be executed by multiple ones of the cores 1502 at the same or different times. In some examples, the machine code corresponding to the firmware program, the embedded software program, or the software program is split into threads and executed in parallel by two or more of the cores 1502. The software program may correspond to a portion or all of the machine readable instructions and/or operations represented by the flowcharts of FIGS. 8-13.

The cores 1502 may communicate by a first example bus 1504. In some examples, the first bus 1504 may implement a communication bus to effectuate communication associated with one(s) of the cores 1502. For example, the first bus 1504 may implement at least one of an Inter-Integrated Circuit (I2C) bus, a Serial Peripheral Interface (SPI) bus, a PCI bus, or a PCIe bus. Additionally or alternatively, the first bus 1504 may implement any other type of computing or electrical bus. The cores 1502 may obtain data, instructions, and/or signals from one or more external devices by example interface circuitry 1506. The cores 1502 may output data, instructions, and/or signals to the one or more external devices by the interface circuitry 1506. Although the cores 1502 of this example include example local memory 1520 (e.g., Level 1 (L1) cache that may be split into an L1 data cache and an L1 instruction cache), the microprocessor 1500 also includes example shared memory 1510 that may be shared by the cores (e.g., Level 2 (L2_ cache)) for highspeed access to data and/or instructions. Data and/or instructions may be transferred (e.g., shared) by writing to and/or reading from the shared memory 1510. The local memory 1520 of each of the cores 1502 and the shared memory 1510 may be part of a hierarchy of storage devices including multiple levels of cache memory and the main memory (e.g., the main memory 1414, 1416 of FIG. 14). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1502 may be referred to as a CPU, DSP, GPU, etc., or any other type of hardware circuitry. Each core 1502 includes control unit circuitry 1514, arithmetic and logic (AL) circuitry (sometimes referred to as an ALU) 1516, a plurality of registers 1518, the L1 cache 1520, and a second example bus 1522. Other structures may be present. For example, each core 1502 may include vector unit circuitry, single instruction multiple data (SIMD) unit circuitry, load/store unit (LSU) circuitry, branch/jump unit circuitry, floating-point unit (FPU) circuitry, etc. The control unit circuitry 1514 includes semiconductor-based circuits structured to control (e.g., coordinate) data movement within the corresponding core 1502. The AL circuitry 1516 includes semiconductor-based circuits structured to perform one or more mathematic and/or logic operations on the data within the corresponding core 1502. The AL circuitry 1516 of some examples performs integer based operations. In other examples, the AL circuitry 1516 also performs floating point operations. In yet other examples, the AL circuitry 1516 may include first AL circuitry that performs integer based operations and second AL circuitry that performs floating point operations. In some examples, the AL circuitry 1516 may be referred to as an Arithmetic Logic Unit (ALU). The registers 1518 are semiconductor-based structures to store data and/or instructions such as results of one or more of the operations performed by the AL circuitry 1516 of the corresponding core 1502. For example, the registers 1518 may include vector register(s), SIMD register(s), general purpose register(s), flag register(s), segment register(s), machine specific register(s), instruction pointer register(s), control register(s), debug register(s), memory management register(s), machine check register(s), etc. The registers 1518 may be arranged in a bank as shown in FIG. 15. Alternatively, the registers 1518 may be organized in any other arrangement, format, or structure including distributed throughout the core 1502 to shorten access time. The second bus 1522 may implement at least one of an I2C bus, a SPI bus, a PCI bus, or a PCIe bus

Each core 1502 and/or, more generally, the microprocessor 1500 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1500 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 16 is a block diagram of another example implementation of the processor circuitry 1412 of FIG. 14. In this example, the processor circuitry 1412 is implemented by FPGA circuitry 1600. The FPGA circuitry 1600 can be used, for example, to perform operations that could otherwise be performed by the example microprocessor 1500 of FIG. 15 executing corresponding machine readable instructions. However, once configured, the FPGA circuitry 1600 instantiates the machine readable instructions in hardware and, thus, can often execute the operations faster than they could be performed by a general purpose microprocessor executing the corresponding software.

More specifically, in contrast to the microprocessor 1500 of FIG. 15 described above (which is a general purpose device that may be programmed to execute some or all of the machine readable instructions represented by the flowcharts of FIGS. 8-13 but whose interconnections and logic circuitry are fixed once fabricated), the FPGA circuitry 1600 of the example of FIG. 16 includes interconnections and logic circuitry that may be configured and/or interconnected in different ways after fabrication to instantiate, for example, some or all of the machine readable instructions represented by the flowcharts of FIGS. 8-13. In particular, the FPGA 1600 may be thought of as an array of logic gates, interconnections, and switches. The switches can be programmed to change how the logic gates are interconnected by the interconnections, effectively forming one or more dedicated logic circuits (unless and until the FPGA circuitry 1600 is reprogrammed). The configured logic circuits enable the logic gates to cooperate in different ways to perform different operations on data received by input circuitry. Those operations may correspond to some or all of the software represented by the flowcharts of FIGS. 8-13. As such, the FPGA circuitry 1600 may be structured to effectively instantiate some or all of the machine readable instructions of the flowcharts of FIGS. 8-13 as dedicated logic circuits to perform the operations corresponding to those software instructions in a dedicated manner analogous to an ASIC. Therefore, the FPGA circuitry 1600 may perform the operations corresponding to the some or all of the machine readable instructions of FIGS. 8-13 faster than the general purpose microprocessor can execute the same.

In the example of FIG. 16, the FPGA circuitry 1600 is structured to be programmed (and/or reprogrammed one or more times) by an end user by a hardware description language (HDL) such as Verilog. The FPGA circuitry 1600 of FIG. 16, includes example input/output (I/O) circuitry 1602 to obtain and/or output data to/from example configuration circuitry 1604 and/or external hardware (e.g., external hardware circuitry) 1606. For example, the configuration circuitry 1604 may implement interface circuitry that may obtain machine readable instructions to configure the FPGA circuitry 1600, or portion(s) thereof. In some such examples, the configuration circuitry 1604 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1606 may implement the microprocessor 1500 of FIG. 15. The FPGA circuitry 1600 also includes an array of example logic gate circuitry 1608, a plurality of example configurable interconnections 1610, and example storage circuitry 1612. The logic gate circuitry 1608 and interconnections 1610 are configurable to instantiate one or more operations that may correspond to at least some of the machine readable instructions of FIGS. 8-13 and/or other desired operations. The logic gate circuitry 1608 shown in FIG. 16 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1608 to enable configuration of the electrical structures and/or the logic gates to form circuits to perform desired operations. The logic gate circuitry 1608 may include other electrical structures such as look-up tables (LUTs), registers (e.g., flip-flops or latches), multiplexers, etc.

The interconnections 1610 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1608 to program desired logic circuits.

The storage circuitry 1612 of the illustrated example is structured to store result(s) of the one or more of the operations performed by corresponding logic gates. The storage circuitry 1612 may be implemented by registers or the like. In the illustrated example, the storage circuitry 1612 is distributed amongst the logic gate circuitry 1608 to facilitate access and increase execution speed.

The example FPGA circuitry 1600 of FIG. 16 also includes example Dedicated Operations Circuitry 1614. In this example, the Dedicated Operations Circuitry 1614 includes special purpose circuitry 1616 that may be invoked to implement commonly used functions to avoid the need to program those functions in the field. Examples of such special purpose circuitry 1616 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1600 may also include example general purpose programmable circuitry 1618 such as an example CPU 1620 and/or an example DSP 1622. Other general purpose programmable circuitry 1618 may additionally or alternatively be present such as a GPU, an XPU, etc., that can be programmed to perform other operations.

Although FIGS. 15 and 16 illustrate two example implementations of the processor circuitry 1412 of FIG. 14, many other approaches are contemplated. For example, as mentioned above, modern FPGA circuitry may include an on-board CPU, such as one or more of the example CPU 1620 of FIG. 16. Therefore, the processor circuitry 1412 of FIG. 14 may additionally be implemented by combining the example microprocessor 1500 of FIG. 15 and the example FPGA circuitry 1600 of FIG. 16. In some such hybrid examples, a first portion of the machine readable instructions represented by the flowcharts of FIGS. 8-13 may be executed by one or more of the cores 1502 of FIG. 15, a second portion of the machine readable instructions represented by the flowcharts of FIGS. 8-13 may be executed by the FPGA circuitry 1600 of FIG. 16, and/or a third portion of the machine readable instructions represented by the flowcharts of FIGS. 8-13 may be executed by an ASIC. It should be understood that some or all of the ML system configuration circuitry 300 of FIG. 3 may, thus, be instantiated at the same or different times. Some or all of the circuitry may be instantiated, for example, in one or more threads executing concurrently and/or in series. Moreover, in some examples, some or all of the ML system configuration circuitry 300 of FIG. 3 may be implemented within one or more virtual machines and/or containers executing on the microprocessor.

In some examples, the processor circuitry 1412 of FIG. 14 may be in one or more packages. For example, the processor circuitry 1500 of FIG. 15 and/or the FPGA circuitry 1600 of FIG. 16 may be in one or more packages. In some examples, an XPU may be implemented by the processor circuitry 1412 of FIG. 14, which may be in one or more packages. For example, the XPU may include a CPU in one package, a DSP in another package, a GPU in yet another package, and an FPGA in still yet another package.

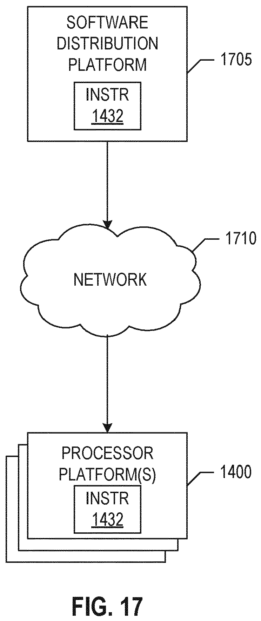

A block diagram illustrating an example software distribution platform 1705 to distribute software such as the example machine readable instructions 1432 of FIG. 14 to hardware devices owned and/or operated by third parties is illustrated in FIG. 17. The example software distribution platform 1705 may be implemented by any computer server, data facility, cloud service, etc., capable of storing and transmitting software to other computing devices. The third parties may be customers of the entity owning and/or operating the software distribution platform 1705. For example, the entity that owns and/or operates the software distribution platform 1705 may be a developer, a seller, and/or a licensor of software such as the example machine readable instructions 1432 of FIG. 14. The third parties may be consumers, users, retailers, OEMs, etc., who purchase and/or license the software for use and/or re-sale and/or sub-licensing. In the illustrated example, the software distribution platform 1705 includes one or more servers and one or more storage devices. The storage devices store the machine readable instructions 1432, which may correspond to the example machine readable instructions 800, 900, 1000, 1100, 1200, 1300 of FIGS. 8-13, as described above. The one or more servers of the example software distribution platform 1705 are in communication with a network 1710, which may correspond to any one or more of the Internet and/or any of the example networks 1426 described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1432 from the software distribution platform 1705. For example, the software, which may correspond to the example machine readable instructions 800, 900, 1000, 1100, 1200, 1300 of FIGS. 8-13, may be downloaded to the example processor platform 1400, which is to execute the machine readable instructions 1432 to implement the ML system configurator 102 of FIGS. 1 and/or 2 and/or the ML system configuration circuitry 300 of FIG. 3. In some example, one or more servers of the software distribution platform 1705 periodically offer, transmit, and/or force updates to the software (e.g., the example machine readable instructions 1432 of FIG. 14) to ensure improvements, patches, updates, etc., are distributed and applied to the software at the end user devices.

From the foregoing, it will be appreciated that example systems, methods, apparatus, and articles of manufacture have been disclosed for composable machine learning compute nodes. Disclosed systems, methods, apparatus, and articles of manufacture improve the efficiency of using a computing device by identifying and/or generating an improved and/or otherwise optimal combination of hardware and/or software to effectuate an AI/ML workload. Disclosed systems, methods, apparatus, and articles of manufacture include an expressive search space representation that covers multiple templates of hardware and software architectures. The templates can be dynamically modifiable during the HW/SW co-design search. Advantageously, the expressive search space enables the HW/SW co-design systems to explore a much larger and richer space of HW/SW designs across multiple architecture styles. One(s) of the architectural styles can be flexible in their respective sets of modules and connectivity (e.g., selection and/or configuration of connections, topologies, inputs/outputs, etc.). The sets of modules and connectivity can be formable through composable building blocks. Advantageously, disclosed systems, methods, apparatus, and articles of manufacture improve the likelihood of discovering more efficient hardware architecture instances and their corresponding co-designed software compared to prior AutoML approaches because examples disclosed herein offer much larger HW/SW search space(s) and composable version(s) thereof. Disclosed systems, methods, apparatus, and articles of manufacture are accordingly directed to one or more improvement(s) in the operation of a machine such as a computer or other electronic and/or mechanical device.

Example methods, apparatus, systems, and articles of manufacture for composable machine learning compute nodes are disclosed herein. Further examples and combinations thereof include the following:
Example 1 includes an apparatus to generate a compute node, the apparatus comprising interface circuitry to receive a workload, instructions in the apparatus, and processor circuitry to at least one of execute or instantiate the instructions to generate a first configuration of one or more machine-learning models based on the workload, the first configuration stored in a first configuration database, the first configuration database including a plurality of machine-learning models, the plurality of the machine-learning models including the one or more machine-learning models, generate a second configuration of hardware, the second configuration stored in a second configuration database, the second configuration database including one or more portions of a plurality of hardware, the plurality of the hardware including the hardware, determine an evaluation parameter based on an execution of the workload, the execution of the workload based on the first configuration and the second configuration, and in response to the evaluation parameter satisfying a threshold, execute the one or more machine-learning models in the first configuration on the hardware in the second configuration, the one or more machine-learning models and the hardware to execute the workload.
In Example 2, the subject matter of Example 1 can optionally include that the first configuration includes at least one of a number of model layers, weights for the model layers, a type of machine-learning training, or one or more hyperparameters associated with the one or more machine-learning models.
In Example 3, the subject matter of Examples 1-2 can optionally include that the one or more portions include at least one of a first block, a second block, or a third block, and the processor circuitry is to at least one of execute or instantiate the instructions to identify the first block of the hardware to execute a matrix-matrix workload, identify the second block of the hardware to execute a vector-vector workload, identify the third block of the hardware to execute a matrix-vector workload, and identify register files for respective ones of the first block, the second block, and the third block, the register files to store states for the respective ones of the first block, the second block, and the third block, the second configuration based on a topology including at least one of the first block, the second block, or the third block.
In Example 4, the subject matter of Examples 1-3 can optionally include that the one or more machine-learning models include a first machine-learning model, and the processor circuitry is to at least one of execute or instantiate the instructions to, in response to the evaluation parameter not satisfying the threshold identify a second machine-learning model in the first configuration database, generate a third configuration of the second machine-learning model, determine the evaluation parameter based on an execution of the workload based on the third configuration, and deploy the second machine-learning model to execute the workload based on the third configuration.
In Example 5, the subject matter of Examples 1-4 can optionally include that the one or more machine-learning models include a first machine-learning model, and the processor circuitry is to at least one of execute or instantiate the instructions to, in response to the evaluation parameter not satisfying the threshold determine one or more first layers of the first machine-learning model to execute a first portion of the workload, identify a second machine-learning model in the first configuration database, determine one or more second layers of the second machine-learning model to execute a second portion of the workload, and determine a third configuration based on a topology of the one or more first layers and the one or more second layers, the topology based on an output from the one or more first layers as an input to the one or more second layers.
In Example 6, the subject matter of Examples 1-5 can optionally include that the one or more machine-learning models include a first machine-learning model, and the processor circuitry is to at least one of execute or instantiate the instructions to identify the first machine-learning model in the first configuration database, identify a second machine-learning model based on a query of an ontology database with an identifier of the first machine-learning model as an input, the ontology database including an association of the first machine-learning model and the second machine-learning model, and in response to the evaluation parameter satisfying the threshold, update the ontology database based on the first configuration.
In Example 7, the subject matter of Examples 1-6 can optionally include that the hardware is first hardware, and the processor circuitry is to at least one of execute or instantiate the instructions to, in response to the evaluation parameter not satisfying the threshold identify second hardware in the second configuration database, generate a third configuration of the second hardware, determine the evaluation parameter based on an execution of the workload by the second hardware in the third configuration, and deploy the second hardware with the third configuration to execute the one or more machine-learning models to execute the workload.
In Example 8, the subject matter of Examples 1-7 can optionally include that the hardware is first hardware, and the processor circuitry is to at least one of execute or instantiate the instructions to, in response to the evaluation parameter not satisfying the threshold determine one or more first portions of the first hardware to execute a first portion of the workload, identify second hardware in the first configuration database, determine one or more second portions of the second hardware to execute a second portion of the workload, and determine a third configuration based on a topology of the one or more first portions and the one or more second portions, the topology based on an output from the one or more first portions as an input to the one or more second portions.
In Example 9, the subject matter of Examples 1-8 can optionally include that the first hardware and the second hardware are one of a central processor unit, a graphics processing unit, a digital signal processor, an Artificial Intelligence processor, a Neural Network processor, or a Field Programmable Gate Array.
In Example 10, the subject matter of Examples 1-9 can optionally include that the evaluation parameter is a first evaluation parameter, and the processor circuitry is to at least one of execute or instantiate the instructions to output a reward function including the first evaluation parameter with a first weight and a second evaluation parameter with a second weight, the first weight greater than the second weight, and in response to determining that at least one of the first evaluation parameter or the second evaluation parameter does not satisfy the threshold, modify at least one of the first configuration or the second configuration to at least one of increase the first evaluation parameter or decrease the second evaluation parameter.
In Example 11, the subject matter of Examples 1-10 can optionally include that the evaluation parameter is at least one of an accuracy, a cost, an energy consumption, a latency, a performance, or a throughput associated with at least one of the one or more machine-learning models or the hardware.
Example 12 includes an apparatus to generate a compute node, the apparatus comprising first means for generating a first configuration of one or more machine-learning models based on a workload, the first configuration stored in a first configuration database, the first configuration database including a plurality of machine-learning models, the plurality of the machine-learning models including the one or more machine-learning models, second means for generating a second configuration of hardware, the second configuration stored in a second configuration database, the second configuration database including one or more portions of a plurality of hardware, the plurality of the hardware including the hardware, means for determining an evaluation parameter based on an execution of the workload, the execution of the workload based on the first configuration and the second configuration, and means for executing the one or more machine-learning models in the first configuration on the hardware in the second configuration in response to the evaluation parameter satisfying a threshold, the one or more machine-learning models and the hardware to execute the workload.
In Example 13, the subject matter of Example 12 can optionally include that the one or more portions include at least one of a first block, a second block, or a third block, and the second means for generating is to identify the first block of the hardware to execute a matrix-matrix workload, identify the second block of the hardware to execute a vector-vector workload, identify the third block of the hardware to execute a matrix-vector workload, and identify register files for respective ones of the first block, the second block, and the third block, the register files to store states for the respective ones of the first block, the second block, and the third block, the second configuration based on a topology including at least one of the first block, the second block, or the third block.
In Example 14, the subject matter of Examples 12-13 can optionally include that the one or more machine-learning models include a first machine-learning model, and the first means for generating is to, in response to the evaluation parameter not satisfying the threshold identify a second machine-learning model in the first configuration database, generate a third configuration of the second machine-learning model, determine the evaluation parameter based on an execution of the workload based on the third configuration, and deploy the second machine-learning model to execute the workload based on the third configuration.
In Example 15, the subject matter of Examples 12-14 can optionally include that the one or more machine-learning models include a first machine-learning model, and the first means for generating is to, in response to the evaluation parameter not satisfying the threshold determine one or more first layers of the first machine-learning model to execute a first portion of the workload, identify a second machine-learning model in the first configuration database, determine one or more second layers of the second machine-learning model to execute a second portion of the workload, and determine a third configuration based on a topology of the one or more first layers and the one or more second layers, the topology based on an output from the one or more first layers as an input to the one or more second layers.
In Example 16, the subject matter of Examples 12-15 can optionally include that the one or more machine-learning models include a first machine-learning model, and the first means for generating is to identify the first machine-learning model in the first configuration database, identify a second machine-learning model based on a query of an ontology database with an identifier of the first machine-learning model as an input, the ontology database including an association of the first machine-learning model and the second machine-learning model, and in response to the evaluation parameter satisfying the threshold, update the ontology database based on the first configuration.
In Example 17, the subject matter of Examples 12-16 can optionally include that the hardware is first hardware, and the second means for generating is to, in response to the evaluation parameter not satisfying the threshold identify second hardware in the second configuration database, generate a third configuration of the second hardware, determine the evaluation parameter based on an execution of the workload by the second hardware in the third configuration, and deploy the second hardware with the third configuration to execute the one or more machine-learning models to execute the workload.
In Example 18, the subject matter of Examples 12-17 can optionally include that the hardware is first hardware, and the second means for generating is to, in response to the evaluation parameter not satisfying the threshold determine one or more first portions of the first hardware to execute a first portion of the workload, identify second hardware in the first configuration database, determine one or more second portions of the second hardware to execute a second portion of the workload, and determine a third configuration based on a topology of the one or more first portions and the one or more second portions, the topology based on an output from the one or more first portions as an input to the one or more second portions.
In Example 19, the subject matter of Examples 12-18 can optionally include that the evaluation parameter is a first evaluation parameter, and the means for determining is to determine a reward function including the first evaluation parameter with a first weight and a second evaluation parameter with a second weight, the first weight greater than the second weight, and in response to determining that at least one of the first evaluation parameter or the second evaluation parameter does not satisfy the threshold, change at least one of the first configuration or the second configuration to at least one of increase the first evaluation parameter or decrease the second evaluation parameter.
Example 20 includes at least one non-transitory computer readable storage medium comprising instructions that, when executed, cause processor circuitry to at least generate a first configuration of one or more machine-learning models based on a workload, the first configuration stored in a first configuration database, the first configuration database including a plurality of machine-learning models, the plurality of the machine-learning models including the one or more machine-learning models, generate a second configuration of hardware, the second configuration stored in a second configuration database, the second configuration database including one or more portions of a plurality of hardware, the plurality of the hardware including the hardware, determine an evaluation parameter based on an execution of the workload, the execution of the workload based on the first configuration and the second configuration, and in response to the evaluation parameter satisfying a threshold, execute the one or more machine-learning models in the first configuration on the hardware in the second configuration, the one or more machine-learning models and the hardware to execute the workload.
In Example 21, the subject matter of Example 20 can optionally include that the first configuration includes at least one of a number of model layers, weights for the model layers, a type of machine-learning training, or one or more hyperparameters associated with the one or more machine-learning models.
In Example 22, the subject matter of Examples 20-21 can optionally include that the one or more portions include at least one of a first block, a second block, or a third block, and the instructions, when executed, cause the processor circuitry to select the first block of the hardware to execute a matrix-matrix workload, select the second block of the hardware to execute a vector-vector workload, select the third block of the hardware to execute a matrix-vector workload, and create register files for respective ones of the first block, the second block, and the third block, the register files to store states for the respective ones of the first block, the second block, and the third block, the second configuration based on a topology including at least one of the first block, the second block, or the third block.
In Example 23, the subject matter of Examples 20-22 can optionally include that the one or more machine-learning models include a first machine-learning model, and the instructions, when executed, cause the processor circuitry to, in response to the evaluation parameter not satisfying the threshold identify a second machine-learning model in the first configuration database, compose a third configuration of the second machine-learning model, calculate the evaluation parameter based on an execution of the workload based on the third configuration, and deploy the second machine-learning model to execute the workload based on the third configuration.
In Example 24, the subject matter of Examples 20-23 can optionally include that the one or more machine-learning models include a first machine-learning model, and the instructions, when executed, cause the processor circuitry to, in response to the evaluation parameter not satisfying the threshold determine one or more first layers of the first machine-learning model to cause an execution of a first portion of the workload, identify a second machine-learning model in the first configuration database, determine one or more second layers of the second machine-learning model to cause an execution of a second portion of the workload, and determine a third configuration based on a topology of the one or more first layers and the one or more second layers, the topology based on an output from the one or more first layers to be coupled to an input to the one or more second layers.
In Example 25, the subject matter of Examples 20-24 can optionally include that the one or more machine-learning models include a first machine-learning model, and the instructions, when executed, cause the processor circuitry to discover the first machine-learning model in the first configuration database, discover a second machine-learning model based on a query of an ontology database with an identifier of the first machine-learning model as an input, the ontology database including an association of the first machine-learning model and the second machine-learning model, and in response to the evaluation parameter satisfying the threshold, update the ontology database based on the first configuration.
In Example 26, the subject matter of Examples 20-25 can optionally include that the hardware is first hardware, and the instructions, when executed, cause the processor circuitry to, in response to the evaluation parameter not satisfying the threshold identify second hardware in the second configuration database, generate a third configuration of the second hardware, determine the evaluation parameter based on an execution of the workload by the second hardware in the third configuration, and deploy the second hardware with the third configuration to execute the one or more machine-learning models to execute the workload.
In Example 27, the subject matter of Examples 20-26 can optionally include that the hardware is first hardware, and the instructions, when executed, cause the processor circuitry to, in response to the evaluation parameter not satisfying the threshold select one or more first portions of the first hardware to execute a first portion of the workload, identify second hardware in the first configuration database, select one or more second portions of the second hardware to execute a second portion of the workload, and determine a third configuration based on a topology of the one or more first portions and the one or more second portions, the topology based on an output from the one or more first portions as an input to the one or more second portions.
In Example 28, the subject matter of Examples 20-27 can optionally include that the evaluation parameter is a first evaluation parameter, and the instructions, when executed, cause the processor circuitry to generate a reward function including the first evaluation parameter with a first weight and a second evaluation parameter with a second weight, the first weight greater than the second weight, and in response to determining that at least one of the first evaluation parameter or the second evaluation parameter does not satisfy the threshold, adjust at least one of the first configuration or the second configuration to at least one of increase the first evaluation parameter or decrease the second evaluation parameter.
Example 29 includes a method for generating a compute node, the method comprising generating a first configuration of one or more machine-learning models based on a workload, the first configuration stored in a first configuration database, the first configuration database including a plurality of machine-learning models, the plurality of the machine-learning models including the one or more machine-learning models, generating a second configuration of hardware, the second configuration stored in a second configuration database, the second configuration database including one or more portions of a plurality of hardware, the plurality of the hardware including the hardware, determining an evaluation parameter based on an execution of the workload, the execution of the workload based on the first configuration and the second configuration, and in response to the evaluation parameter satisfying a threshold, executing the one or more machine-learning models in the first configuration on the hardware in the second configuration, the one or more machine-learning models and the hardware to execute the workload.
In Example 30, the subject matter of Example 29 can optionally include that the first configuration includes at least one of a number of model layers, weights for the model layers, a type of machine-learning training, or one or more hyperparameters associated with the one or more machine-learning models.
In Example 31, the subject matter of Examples 29-30 can optionally include that the one or more portions include at least one of a first block, a second block, or a third block, and further including identifying the first block of the hardware to execute a matrix-matrix workload, identifying the second block of the hardware to execute a vector-vector workload, identifying the third block of the hardware to execute a matrix-vector workload, and identifying register files for respective ones of the first block, the second block, and the third block, the register files to store states for the respective ones of the first block, the second block, and the third block, the second configuration based on a topology including at least one of the first block, the second block, or the third block.
In Example 32, the subject matter of Examples 29-31 can optionally include that the one or more machine-learning models include a first machine-learning model, and further including, in response to the evaluation parameter not satisfying the threshold identifying a second machine-learning model in the first configuration database, generating a third configuration of the second machine-learning model, determining the evaluation parameter based on an execution of the workload based on the third configuration, and deploying the second machine-learning model to execute the workload based on the third configuration.
In Example 33, the subject matter of Examples 29-32 can optionally include that the one or more machine-learning models include a first machine-learning model, and further including, in response to the evaluation parameter not satisfying the threshold determining one or more first layers of the first machine-learning model to execute a first portion of the workload, identifying a second machine-learning model in the first configuration database, determining one or more second layers of the second machine-learning model to execute a second portion of the workload, and determining a third configuration based on a topology of the one or more first layers and the one or more second layers, the topology based on an output from the one or more first layers as an input to the one or more second layers.
In Example 34, the subject matter of Examples 29-33 can optionally include that the one or more machine-learning models include a first machine-learning model, and further including identifying the first machine-learning model in the first configuration database, identifying a second machine-learning model based on a query of an ontology database with an identifier of the first machine-learning model as an input, the ontology database including an association of the first machine-learning model and the second machine-learning model, and in response to the evaluation parameter satisfying the threshold, updating the ontology database based on the first configuration.
In Example 35, the subject matter of Examples 29-34 can optionally include that the hardware is first hardware, and further including, in response to the evaluation parameter not satisfying the threshold identifying second hardware in the second configuration database, generating a third configuration of the second hardware, determining the evaluation parameter based on an execution of the workload by the second hardware in the third configuration, and deploying the second hardware with the third configuration to execute the one or more machine-learning models to execute the workload.
In Example 36, the subject matter of Examples 29-35 can optionally include that the hardware is first hardware, and further including, in response to the evaluation parameter not satisfying the threshold determining one or more first portions of the first hardware to execute a first portion of the workload, identifying second hardware in the first configuration database, determining one or more second portions of the second hardware to execute a second portion of the workload, and determining a third configuration based on a topology of the one or more first portions and the one or more second portions, the topology based on an output from the one or more first portions as an input to the one or more second portions.
In Example 37, the subject matter of Examples 29-36 can optionally include that the first hardware and the second hardware are one of a central processor unit, a graphics processing unit, a digital signal processor, an Artificial Intelligence processor, a Neural Network processor, or a Field Programmable Gate Array.
In Example 38, the subject matter of Examples 29-37 can optionally include that the evaluation parameter is a first evaluation parameter, and further including outputting a reward function including the first evaluation parameter with a first weight and a second evaluation parameter with a second weight, the first weight greater than the second weight, and in response to determining that at least one of the first evaluation parameter or the second evaluation parameter does not satisfy the threshold, adjusting at least one of the first configuration or the second configuration to at least one of increase the first evaluation parameter or decrease the second evaluation parameter.
In Example 39, the subject matter of Examples 29-38 can optionally include that the evaluation parameter is at least one of an accuracy, a cost, an energy consumption, a latency, a performance, or a throughput associated with at least one of the one or more machine-learning models or the hardware.

The following claims are hereby incorporated into this Detailed Description by this reference. Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

## Claims

1. A method for generating a compute node, the method comprising:
generating a first configuration of one or more machine-learning models based on the workload, the first configuration stored in a first configuration database, the first configuration database including a plurality of machine-learning models, the plurality of the machine-learning models including the one or more machine-learning models; generating a second configuration of hardware, the second configuration stored in a second configuration database, the second configuration database including one or more portions of a plurality of hardware, the plurality of the hardware including the hardware;
determining an evaluation parameter based on an execution of the workload, the execution of the workload based on the first configuration and the second configuration; and
in response to the evaluation parameter satisfying a threshold, executing the one or more machine-learning models in the first configuration on the hardware in the second configuration, the one or more machine-learning models and the hardware to execute the workload.

2. The method of claim 1,
wherein the first configuration includes at least one of a number of model layers, weights for the model layers, a type of machine-learning training, or one or more hyperparameters associated with the one or more machine-learning models; and/or
wherein the one or more portions include at least one of a first block, a second block, or a third block, and the method further including:
identifying the first block of the hardware to execute a matrix-matrix workload;
identifying the second block of the hardware to execute a vector-vector workload;
identifying the third block of the hardware to execute a matrix-vector workload; and
identifying register files for respective ones of the first block, the second block, and the third block, the register files to store states for the respective ones of the first block, the second block, and the third block, the second configuration based on a topology including at least one of the first block, the second block, or the third block.

3. The method of any one of claims 1 or 2,
wherein the one or more machine-learning models include a first machine-learning model, and the method further including, in response to the evaluation parameter not satisfying the threshold:
identifying a second machine-learning model in the first configuration database;
generating a third configuration of the second machine-learning model;
determining the evaluation parameter based on an execution of the workload based on the third configuration; and
deploying the second machine-learning model to execute the workload based on the third configuration; and/or
wherein the one or more machine-learning models include a first machine-learning model, and the method further including, in response to the evaluation parameter not satisfying the threshold:
determining one or more first layers of the first machine-learning model to execute a first portion of the workload;
identifying a second machine-learning model in the first configuration database;
determining one or more second layers of the second machine-learning model to execute a second portion of the workload; and
determining a third configuration based on a topology of the one or more first layers and the one or more second layers, the topology based on an output from the one or more first layers as an input to the one or more second layers.

4. The method of any one of claims 1 to 3,
wherein the one or more machine-learning models include a first machine-learning model, and the method further including:
identifying the first machine-learning model in the first configuration database;
identifying a second machine-learning model based on a query of an ontology database with an identifier of the first machine-learning model as an input, the ontology database including an association of the first machine-learning model and the second machine-learning model; and
in response to the evaluation parameter satisfying the threshold, updating the ontology database based on the first configuration.

5. The method of any one of claims 1 to 4,
wherein the hardware is first hardware, and the method further including, in response to the evaluation parameter not satisfying the threshold:
identifying second hardware in the second configuration database;
generating a third configuration of the second hardware;
determining the evaluation parameter based on an execution of the workload by the second hardware in the third configuration; and
deploying the second hardware with the third configuration to execute the one or more machine-learning models to execute the workload.

6. The method of any one of claims 1 to 5,
wherein the hardware is first hardware, and the method further including, in response to the evaluation parameter not satisfying the threshold:
determining one or more first portions of the first hardware to execute a first portion of the workload;
identifying second hardware in the first configuration database;
determining one or more second portions of the second hardware to execute a second portion of the workload; and
determining a third configuration based on a topology of the one or more first portions and the one or more second portions, the topology based on an output from the one or more first portions as an input to the one or more second portions;
optionally wherein the first hardware and the second hardware are one of a central processor unit, a graphics processing unit, a digital signal processor, an Artificial Intelligence processor, a Neural Network processor, or a Field Programmable Gate Array.

7. The method of any one of claims 1 to 6,
wherein the evaluation parameter is a first evaluation parameter, and the method further including:
outputting a reward function including the first evaluation parameter with a first weight and a second evaluation parameter with a second weight, the first weight greater than the second weight; and
in response to determining that at least one of the first evaluation parameter or the second evaluation parameter does not satisfy the threshold, modifying at least one of the first configuration or the second configuration to at least one of increase the first evaluation parameter or decrease the second evaluation parameter.

8. The method of any one of claims 1 to 7,
wherein the evaluation parameter is at least one of an accuracy, a cost, an energy consumption, a latency, a performance, or a throughput associated with at least one of the one or more machine-learning models or the hardware.

9. Machine-readable storage including machine-readable instructions that, when executed, implement a method or realize an apparatus as claimed in any preceding claim.

10. An apparatus comprising means to perform a method as claimed any preceding claim.
